# EUROPÄISCHE PATENTSCHRIFT

(11) **EP 3 966 929 B1**
(45) Veröffentlichungstag und Bekanntmachung des Hinweises auf die Patenterteilung: **06.09.2023**
(21) Anmeldenummer: 20727583.5
(22) Anmeldetag: 05.05.2020
(51) Int. Cl.: H02S 20/30, F24S 30/425, H02S 20/32

(54) **SOLARMODULHALTEVORRICHTUNG UND VERFAHREN ZUR HERSTELLUNG EINER SOLARMODULHALTEVORRICHTUNG**
SOLAR MODULE HOLDING DEVICE AND METHOD FOR PRODUCING A SOLAR MODULE HOLDING DEVICE
DISPOSITIF DE RETENUE DE MODULE SOLAIRE ET PROCÉDÉ DE FABRICATION D'UN DISPOSITIF DE RETENUE DE MODULE SOLAIRE

(30) Priorität: 09.05.2019 DE 102019112201
(43) Veröffentlichungstag der Anmeldung: 16.03.2022
(73) Patentinhaber: Zimmermann, Robert, 88436 Eberhardzell (DE)
(72) Erfinder: Zimmermann, Robert, 88436 Eberhardzell (DE)
(74) Vertreter: Daub, Thomas
(86) Internationale Anmeldenummer: PCT/EP2020/062427
(87) Internationale Veröffentlichungsnummer: WO 2020/225251

(56) Entgegenhaltungen:
- CN-U- 205 453 610
- DE-U1- 20 319 065
- ES-A1- 2 351 811
- KR-A- 20090 119 281
- US-A1- 2015 001 356
- US-A1- 2015 200 621
- US-A1- 2016 365 827
- US-A1- 2017 359 017
- US-A1- 2018 224 161

## Beschreibung

### Stand der Technik

Die Erfindung betrifft eine Solarmodulhaltevorrichtung nach dem Oberbegriff des Anspruchs 1, einen Solarpark nach Anspruch 24 und ein Verfahren zur Herstellung einer Solarmodulhaltevorrichtung nach Anspruch 25.

In der US 2017/359017 A1 wurde bereits eine Solarmodulhaltevorrichtung, welche dazu vorgesehen ist, eine Montage zumindest eines Solarmoduls mit einer Achse zu ermöglichen, mit einem Grundkörper, welcher zumindest eine Auflagefläche ausbildet, welche zu einer Auflage zumindest eines Teils des Solarmoduls vorgesehen ist, wobei der Grundkörper als ein Blechteil ausgebildet ist, und mit einstückig an den Grundkörper angeformten Solarmodulhalteelementen, vorgeschlagen worden.

Die Aufgabe der Erfindung besteht insbesondere darin, eine gattungsgemäße Vorrichtung mit vorteilhaften Eigenschaften hinsichtlich einer Effizienz, insbesondere in Bezug auf eine sichere Halterung bei einem reduzierten Materialbedarf, bereitzustellen. Die Aufgabe wird erfindungsgemäß durch die Merkmale der Patentansprüche 1, 24 und 25 gelöst, während vorteilhafte Ausgestaltungen und Weiterbildungen der Erfindung den Unteransprüchen entnommen werden können.

### Vorteile der Erfindung

Die Erfindung geht aus von einer Solarmodulhaltevorrichtung, welche dazu vorgesehen ist, eine Montage zumindest eines, insbesondere sonnenstandfolgenden, Solarmoduls mit einer, insbesondere rotierbaren, Achse zu ermöglichen, mit einem Grundkörper, welcher zumindest eine Auflagefläche ausbildet, welche zu einer Auflage zumindest eines Teils des Solarmoduls vorgesehen ist, wobei der Grundkörper als ein, vorzugsweise einstückiges, Blechteil ausgebildet ist, mit zumindest einem einstückig an den Grundkörper angeformten Solarmodulhalteelement, welches zu einer Befestigung eines Solarmoduls vorgesehen ist, und mit zumindest einem weiteren, einstückig an den Grundkörper angeformten Solarmodulhalteelement, welches zu einer Befestigung eines von dem Solarmodul verschiedenen weiteren Solarmoduls vorgesehen ist, wobei die Solarmodulhalteelemente hakenförmig ausgebildet sind und aus der Auflagefläche des Grundkörpers hervorstehen, wobei die Solarmodulhalteelemente jeweils dazu vorgesehen sind, eine Formschlussverbindung mit jeweils einem Solarmodul herzustellen, wobei der Grundkörper eine Seitenwandung und eine weitere Seitenwandung aufweist.

Es wird vorgeschlagen, dass das Solarmodulhalteelement und das weitere Solarmodulhalteelement jeweils von einer Mittellinie der Auflagefläche nach außen in Richtung der jeweiligen Seitenwandungen versetzt angeordnet sind. Es kann vorteilhaft eine besonders einfache und/oder besonders effiziente Herstellung der Solarmodulhaltevorrichtung, beispielsweise in einem einfachen Stanzbiegeverfahren, ermöglicht werden. Vorteilhaft können somit besonders kurze Herstellungszeiten erreicht werden, wodurch insbesondere Stückzahlkosten reduziert werden. Zudem kann, insbesondere durch eine Fertigung aus einem einzelnen rechteckigen Metallblech, vorteilhaft ein Materialverschnitt besonders gering gehalten werden. Die Solarmodulhaltevorrichtung ist insbesondere als ein Zwischenstück zwischen der eine Rotation erzeugenden Achse und den der Achse zugeordneten Solarmodulen ausgebildet, welches vorzugsweise einerseits eine Bewegung der Achse auf das Solarmodul übertragen und andererseits eine Befestigung des Solarmoduls an der Achse gewährleisten soll. Vorzugsweise sind innerhalb eines Solarparks mehrere Solarmodule einer Achse zugeordnet, wobei jedes Solarmodul mit mindestens einer, vorzugsweise mit mindestens zwei, Solarmodulhaltevorrichtung(en) verbunden ist. Unter einem "Solarmodul" soll insbesondere ein Modul verstanden werden, welches dazu vorgesehen ist, Strom aus Sonnenlicht zu erzeugen. Vorzugsweise ist das Solarmodul als ein Photovoltaikmodul ausgebildet. Insbesondere ist die Achse als eine Stange, als ein Stab, als ein Holm oder dergleichen ausgebildet. Insbesondere ist die Achse mit einem eine Rotation erzeugenden Motor verbunden, welcher vorzugsweise dazu vorgesehen ist, eine Rotationsstellung der Achse in Abhängigkeit von einem Sonnenstand einzustellen. Insbesondere liegen die Solarmodule jeweils in einem Randbereich der Solarmodule, insbesondere mit einem Rahmenteil der Solarmodule, auf der Auflagefläche der Solarmodulhaltevorrichtung auf. Das Blechteil ist insbesondere als ein Metallblechteil, beispielsweise als ein Aluminiumblechteil oder als ein Stahlblechteil ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorteilhaft soll unter "einstückig" auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass eine Höhe des Grundkörpers und einer Breite der Auflagefläche des Grundkörpers zumindest abschnittsweise antikorrelieren. Dadurch kann vorteilhaft eine hohe Effizienz erreicht werden, insbesondere indem ein in einem flachen, ungepressten Zustand im Wesentlichen rechteckiges Blech als Ausgangsmaterial verwendet werden kann und indem ein Verschnitt möglichst gering gehalten werden kann. Insbesondere ist die Höhe des Grundkörpers durch die Breite des Grundkörpers kompensiert oder umgekehrt. Vorteilhaft kann eine besonders gute Kraftverteilung innerhalb des Grundkörpers erreicht werden, insbesondere indem der Grundkörper in Bereiche aufgeteilt werden kann, welche besonders geeignet sind, Kräfte aufzunehmen und in Bereiche, welche besonders dazu geeignet sind, eine möglichst große Auflagefläche auszubilden. Unter "zumindest abschnittsweise" soll in diesem Zusammenhang insbesondere zumindest ein Abschnitt verstanden werden, welcher entlang einer Längsrichtung des Grundkörpers gesehen zwischen einer Mitte des Grundkörpers und einem Endbereich des Grundkörpers liegt. Insbesondere antikorrelieren die Höhe des Grundkörpers und die Breite der Auflagefläche des Grundkörpers zumindest in einem Bereich des Grundkörpers, in dem sich die Auflagefläche des Grundkörpers entlang der Längsrichtung verjüngt. Unter einer "Längsrichtung" eines Objekts, insbesondere des Grundkörpers oder der Auflagefläche soll insbesondere eine Richtung verstanden werden, welche parallel zu einer Haupterstreckungsrichtung desselben Objekts, insbesondere des Grundkörpers oder der Auflagefläche, verläuft, wobei die "Haupterstreckungsrichtung" eines Objekts dabei insbesondere als eine Richtung verstanden werden soll, welche parallel zu einer längsten Kante eines kleinsten geometrischen Quaders verläuft, welcher das Objekt gerade noch vollständig umschließt. Insbesondere sind die Längsrichtung des Grundkörpers und die Längsrichtung der Auflagefläche zueinander parallel, vorzugsweise identisch zueinander. Unter einer Höhe des Grundkörpers soll insbesondere eine Erstreckung des Grundkörpers in eine Richtung senkrecht zu einer durch die Auflagefläche gebildete Auflageebene verstanden werden. Unter einer Breite der Auflagefläche soll insbesondere eine Erstreckung der Auflagefläche in eine Richtung senkrecht zu der Längsrichtung verstanden werden. Darunter, dass zwei Parameter zueinander antikorrelieren soll insbesondere verstanden werden, dass eine Vergrößerung eines der Parameter eine Verkleinerung des anderen Parameters nach sich zieht oder umgekehrt.

Wenn der Grundkörper zumindest einen Verjüngungsbereich aufweist, innerhalb welchem sich die Auflagefläche zu einer Mitte des Grundkörpers hin verjüngt, kann vorteilhaft eine besonders gute Kraftverteilung innerhalb des Grundkörpers und/oder eine besonders gute Kraftaufnahmekapazität des Grundkörpers erreicht werden, insbesondere indem in einem zentralen Bereich des Grundkörpers eine besonders hohe Steifigkeit des Grundkörpers gegen eine Belastung insbesondere in eine Richtung senkrecht zu der Auflagefläche erreicht werden kann und/oder indem in einem in Längsrichtung der Auflagefläche außenliegendem Bereich des Grundkörpers eine möglichst große Auflagefläche ermöglicht werden kann. Als eine Mitte des Grundkörpers soll insbesondere eine Mitte der Auflagefläche in Längsrichtung der Auflagefläche verstanden werden. Vorzugsweise verjüngt sich die Auflagefläche von beiden in Längsrichtung außenliegenden Endbereichen des Grundkörpers in Richtung der Mitte der Auflagefläche hin. Insbesondere weist die Auflagefläche eine maximale Breite an den in Längsrichtung gesehenen Endbereichen des Grundkörpers auf. Insbesondere weist die Auflagefläche eine minimale Breite in dem in Längsrichtung gesehenen Mittelbereich des Grundkörpers auf. Vorzugsweise erfolgt die Verjüngung in dem Verjüngungsbereich kontinuierlich und/oder linear. Alternativ kann die Verjüngung auch einen von einem linearen Verlauf abweichenden Verlauf aufweisen. Insbesondere verringert sich die Breite der Auflagefläche innerhalb des Verjüngungsbereichs um mindestens 40 %, vorzugsweise um mindestens 65 %, bevorzugt um mindestens 100 % und besonders bevorzugt um höchstens 150 %.

Eine besonders vorteilhafte Kraftverteilung über den Grundkörper und/oder eine besonders vorteilhafte Kraftaufnahmekapazität des Grundkörpers kann zudem erreicht werden, wenn die Höhe des Grundkörpers in dem Verjüngungsbereich zu der Mitte des Grundkörpers hin, insbesondere zur Mitte der Auflagefläche hin, zunimmt. Dadurch kann vorteilhaft eine besonders hohe Steifigkeit des Grundkörpers in einem Nahbereich der Mitte des Grundkörpers bzw. in einem Nahbereich eines, vorzugsweise mittig in dem Grundkörper angeordneten Achsenauflageelements, welches zu einer Verbindung des Grundkörpers mit der Achse vorgesehen ist, erreicht werden. Insbesondere beträgt ein Verhältnis aus Höhe des Grundkörpers und Breite der Auflagefläche in einem der in Längsrichtung außenliegenden Endbereiche des Grundkörpers wenigstens 1:3, vorzugsweise wenigstens 1:2 und bevorzugt höchstens 1:1. Insbesondere beträgt ein Verhältnis aus Höhe des Grundkörpers und Breite der Auflagefläche in der Mitte der Auflagefläche höchstens 2:1, vorzugsweise höchstens 3:2 und bevorzugt wenigstens 1:1. Insbesondere steigt die Höhe des Grundkörpers innerhalb des Verjüngungsbereichs um mindestens 30 %, vorzugsweise um mindestens 50 % und bevorzugt um mindestens 70 % und besonders bevorzugt um höchstens 100 %.

Zu einer weiteren Verbesserung der vorteilhaften Kraftverteilung und/oder der vorteilhaften Kraftaufnahmekapazität wird vorgeschlagen, dass der Grundkörper zumindest eine Seitenwandung, vorzugsweise zwei Seitenwandungen, aufweist, welche zumindest im Wesentlichen senkrecht zu der Auflagefläche abgebogen ist/sind. Insbesondere ist die Seitenwandung einteilig mit dem Blechteil ausgebildet. Insbesondere ist die Seitenwandung durch ein in einem Winkel von etwa 90° relativ zu der Auflagefläche abgebogenes Stück des Blechteils ausgebildet. Insbesondere umfasst der Grundkörper zwei an gegenüberliegenden Enden des Grundkörpers angeordnete Seitenwandungen. Insbesondere sind die Seitenwandungen zumindest an langen Kanten des Grundkörpers angeordnet.

Insbesondere sind die Seitenwandungen zumindest an den Enden des Grundkörpers angeordnet, welche den Grundkörper senkrecht zu der Längsrichtung begrenzen. Insbesondere sind die Seitenwandungen zumindest im Wesentlichen identisch zueinander ausgebildet. Unter "im Wesentlichen identisch" soll insbesondere identisch, abgesehen von Fertigungstoleranzen verstanden werden. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Außerdem wird zu einer weiteren Verbesserung der vorteilhaften Kraftverteilung und/oder der vorteilhaften Kraftaufnahmekapazität vorgeschlagen, dass die Seitenwandung zumindest entlang eines Großteils einer Längserstreckung des Grundkörpers den Grundkörper seitlich begrenzt. Unter einem "seitlichen Begrenzen" des Grundkörpers soll insbesondere ein Begrenzen des Grundkörpers in einer Richtung senkrecht zu der Längsrichtung des Grundkörpers verstanden werden. Unter einer "Längserstreckung" soll insbesondere eine maximale Erstreckung des Grundkörpers in eine zu der Haupterstreckungsrichtung und/oder der Längsrichtung parallel verlaufende Richtung verstanden werden. Unter einem "Großteil der Längserstreckung" soll in diesem Zusammenhang insbesondere zumindest 51 %, vorzugsweise zumindest 55 % und bevorzugt zumindest 60 % einer gesamten Längserstreckung des Grundkörpers verstanden werden. Besonders bevorzugt begrenzen die Seitenwände den Grundkörper entlang der gesamten Längserstreckung des Grundkörpers abgesehen von einem Bereich des Grundkörpers, in welchem der Grundkörper Achsenauflageelemente ausbildet.

Zudem wird vorgeschlagen, dass Gesamtlängen von Abwicklungen, senkrecht zu einer Längsrichtung des Grundkörpers angefertigter Schnitte, über einen Großteil des Grundkörpers, insbesondere in dem Verjüngungsbereich, zumindest im Wesentlichen konstant sind. Dadurch kann vorteilhaft eine hohe Effizienz in Bezug auf den Materialverbrauch erreicht werden. Insbesondere kann dadurch ein Verschnitt besonders gering gehalten werden. Vorteilhaft entspricht eine Abwicklung des gesamten Grundkörpers zumindest im Wesentlichen einer rechteckigen Platte. Unter einem "Großteil des Grundkörpers" soll in diesem Zusammenhang zumindest 51 %, vorzugsweise zumindest 60 %, bevorzugt zumindest 66 % und besonders bevorzugt zumindest 75 % des gesamten Grundkörpers verstanden werden. Insbesondere sind zumindest 70 %, vorzugsweise zumindest 80 % aller Gesamtlängen von Abwicklungen senkrecht zu einer Haupterstreckungsrichtung des Grundkörpers angefertigter Schnitte in dem Verjüngungsbereich zumindest im Wesentlichen konstant. Unter einer "Abwicklung" soll insbesondere eine Blechabwicklung und/oder eine Platine verstanden werden. Vorzugsweise soll unter der Abwicklung ein gedachtes ebenes, insbesondere ungebogenes Blech verstanden werden, welches für eine Herstellung des Grundkörpers, beispielsweise durch ein Abkanten oder durch ein Stanzbiegen, benötigt wird. Unter "im Wesentlichen konstanten" Gesamtlängen sollen in diesem Zusammenhang insbesondere Längen verstanden werden, welche eine maximale Abweichung voneinander aufweisen, die kleiner ist als 5 %, vorzugsweise kleiner ist als 3 % und bevorzugt kleiner ist als 1 %.

Wenn zumindest ein Großteil des Grundkörpers eine zumindest im Wesentlichen konstante Materialstärke, insbesondere Wandstärke, aufweist, kann vorteilhaft eine besonders hohe Stabilität der Solarmodulhaltevorrichtung erreicht werden. Zudem kann vorteilhaft eine besonders hohe Effizienz hinsichtlich eines Materialverbrauchs erreicht werden. Insbesondere indem bei einer Wahl einer gewünschten Endwandstärke keine Wandstärkenreduzierungen durch ein Zugspannen eines Ausgangsblechs miteinberechnet werden müssen, wodurch insbesondere unverformte Teile des Grundkörpers eine unnötig hohe Materialstärke haben können. Insbesondere ist der Grundkörper zumindest im Wesentlichen frei von einem eine Materialstärke verändernden Herstellungsverfahren, wie beispielsweise einem Tiefziehen, hergestellt. Dadurch können vorteilhaft Abweichungen von Wandstärken verschiedener Solarmodulhaltevorrichtungen gering gehalten werden. Unter einem "Großteil des Grundkörpers" soll in diesem Zusammenhang insbesondere zumindest 90 %, vorzugsweise zumindest 95 %, vorteilhaft zumindest 97 % und bevorzugt zumindest 99 % verstanden werden. Besonders bevorzugt weist der gesamte Grundkörper eine konstante Materialstärke, insbesondere Wandstärke, auf, insbesondere abgesehen von Teilbereichen der Achsenauflageelemente. Unter einer "im Wesentlichen konstanten Materialstärke" soll insbesondere eine Materialstärke verstanden werden, welche in einem Bereich von Fertigungstoleranzen konstant ist. Vorzugsweise beträgt eine Abweichung der Materialstärken über den Grundkörper verteilt weniger als 8 %, vorteilhaft weniger als 5 %, bevorzugt weniger als 3 % und besonders bevorzugt weniger als 1 %. Insbesondere beträgt die konstante Materialstärke etwa 2,5 mm.

Außerdem wird vorgeschlagen, dass der Grundkörper, insbesondere die Seitenwandung, zumindest das Achsenauflageelement ausbildet, welches zu einer Auflage des Grundkörpers auf die Achse vorgesehen ist. Dadurch kann vorteilhaft eine stabile Auflage des Grundkörpers auf die Achse erreicht werden. Vorteilhaft kann eine hohe Stabilität, insbesondere eines montierten Zustands, in dem der Grundkörper auf der Achse befestigt ist, erreicht werden. Das Achsenauflageelement ist einteilig mit dem Grundkörper ausgebildet. Das Achsenauflageelement ist zumindest im Wesentlichen senkrecht zu der Seitenwandung von der Seitenwandung abgebogen. Das Achsenauflageelement ist von der Auflagefläche wegzeigend nach außen von der Seitenwandung abgebogen. Alternativ könnte das Achsenauflageelement auch zu der Auflagefläche hinzeigend nach innen abgebogen ausgebildet sein oder als eine Kante der Seitenwandung ausgebildet sein, welche insbesondere frei von einer Biegung ausgebildet ist und dazu vorgesehen ist, direkt mit der Kante auf der Achse aufzuliegen. Insbesondere bildet das Achsenauflageelement eine Achsenauflagefläche aus, welche in dem montierten Zustand auf einer Oberfläche der Achse aufliegt.

Des Weiteren wird vorgeschlagen, dass das Achsenauflageelement eine Erstreckung senkrecht zu einer Längsrichtung der Auflagefläche des Grundkörpers aufweist, die zumindest einem Dreifachen, vorzugsweise einem Vierfachen, einer Materialstärke des Grundkörpers entspricht. Dadurch kann vorteilhaft eine besonders hohe Stabilität, insbesondere des montierten Zustands, in dem der Grundkörper auf der Achse befestigt ist, erreicht werden. Zudem kann vorteilhaft ein Verkanten des Grundkörpers mit der Achse möglichst unterbunden werden. Insbesondere beträgt die Erstreckung des Achsenauflageelements senkrecht zu der Längsrichtung der Auflagefläche des Grundkörpers 10 mm.

Wenn die durch das Achsenauflageelement ausgebildete Achsenauflagefläche in einer Seitenansicht auf den Grundkörper eine zumindest im Wesentlichen polygonale, insbesondere eine zumindest im Wesentlichen semi-hexagonale, Kontur ausbildet, kann vorteilhaft eine besonders hohe Stabilität, insbesondere des montierten Zustands, in dem der Grundkörper auf der Achse befestigt ist, erreicht werden. Zudem kann dadurch vorteilhaft eine verdrehsichere Halterung des Grundkörpers und damit auch des Solarmoduls auf der Achse erreicht werden. Vorteilhaft kann dadurch erreicht werden, dass der Grundkörper eine Rotation der Achse um eine parallel zu einer Längsrichtung der Achse verlaufende Rotationsachse der Achse folgt. Insbesondere ist die Kontur polygonal, vorzugsweise semi-hexagonal, abgesehen von einer einzelnen Seite des Polygons, vorzugsweise des Semi-Hexagons, welche eine zusätzliche, insbesondere teilkreisförmige, Ausnehmung und/oder Auswölbung aufweist.

Zusätzlich wird vorgeschlagen, dass das Achsenauflageelement zumindest einen Teilbereich aufweist, welcher dazu vorgesehen ist, bei einer Auflage des Grundkörpers auf die Achse frei von einem Kontakt mit der Achse zu bleiben und dadurch in einer Längsrichtung der Achse einen, insbesondere vergrößerten, Zwischenraum zwischen der Achse und dem Grundkörper bereitstellt. Dadurch kann vorteilhaft in dem montierten Zustand, in dem der Grundkörper auf der Achse befestigt ist, ein, insbesondere vergrößerter, Raum für eine Führung von Kabeln o.ä. entlang der Achse erreicht werden. Insbesondere kann dadurch vorteilhaft ein Stecker, insbesondere ein genormter Solarmodulstecker durch den Zwischenraum zwischen der Achse und dem Grundkörper geführt werden. Vorteilhaft kann dadurch eine hohe Montage- und/oder Wartungseffizienz erreicht werden.

Weiterhin wird vorgeschlagen, dass, insbesondere zu einer Ermöglichung einer vorteilhaften Befestigung des Grundkörpers an der Achse die Seitenwandung zumindest eine Ausnehmung aufweist, welche zu einer Befestigung einer Achsenmontageklammer vorgesehen ist. Insbesondere ist die Ausnehmung als ein rechteckiges Langloch ausgebildet, welches sich insbesondere in eine parallel zu der Auflagefläche des Grundkörpers verlaufende Richtung entlang der Seitenwandung erstreckt. Vorzugsweise weist jede Seitenwandung zumindest zwei Ausnehmungen auf, welche zu einer Befestigung jeweils einer Achsenmontageklammer vorgesehen sind. Insbesondere sind die Ausnehmungen verschiedener Seitenwandungen in einer Richtung senkrecht zu der Längsrichtung des Grundkörpers gegenüberliegend zueinander angeordnet. Insbesondere sind die zwei Ausnehmungen einer Seitenwandung relativ zu dem Achsenauflageelement der Seitenwandung auf gegenüberliegenden Seiten angeordnet. Insbesondere sind die Ausnehmungen einer Seitenwandung zueinander gespiegelt angeordnet. Insbesondere ist eine Erstreckung in eine Richtung senkrecht zu der Auflagefläche des Grundkörpers jeder Ausnehmung auf einer dem Achsenauflageelement zugewandten Seite der Ausnehmung vergrößert. Dadurch kann vorteilhaft ein Verrutschen der Achsenmontageklammer in dem montierten Zustand verhindert werden. Die Achsenmontageklammer ist insbesondere dazu vorgesehen, in dem montierten Zustand teilweise in zumindest zwei auf gegenüberliegenden Seitenwandungen angeordnete Ausnehmungen einzugreifen und dadurch in die Ausnehmung eingehängt zu werden.

Wenn die Ausnehmung zur Aufnahme der Achsenmontageklammer zumindest teilweise, vorzugsweise zumindest zu einem Großteil, in einem Verjüngungsbereich des Grundkörpers angeordnet ist, kann vorteilhaft eine hohe Montageeffizienz erreicht werden. Insbesondere kann vorteilhaft eine besonders einfache Montage der Achsenmontageklammer an dem Grundkörper ermöglich werden. Insbesondere kann dadurch ein für einen Eingriff in die Ausnehmung der Seitenwandung vorgesehener Teil der Achsenmontageklammer zunächst in einem Bereich des Grundkörpers, in welchem die Seitenwandungen durch die Verjüngung der Auflagefläche einen größeren Abstand voneinander aufweisen, zwischen gegenüberliegende Seitenwandungen eingeschoben werden und somit auf einfache Weise in den Ausnehmungen positioniert werden. Anschließend kann der für den Eingriff in die Ausnehmung der Seitenwandung vorgesehene Teil der Achsenmontageklammer vorteilhaft weiter in Richtung der Mitte des Grundkörpers bewegt werden, bis er vorzugsweise seitlich aus den Ausnehmungen herausragt und über die Seitenwandungen übersteht und somit zumindest in eine Richtung senkrecht zu der Auflagefläche relativ zu dem Grundkörper fixiert ist. Unter "einem Großteil" soll in diesem Zusammenhang insbesondere zu 80 %, vorzugsweise zu 90 % und bevorzugt zu 95 % verstanden werden.

Die Solarmodulhaltevorrichtung weist zumindest ein einstückig, vorzugsweise einteilig, an den Grundkörper angeformtes Solarmodulhalteelement auf, welches zu einer Befestigung und/oder Positionierung eines Solarmoduls vorgesehen ist. Dadurch kann vorteilhaft eine hohe Montageeffizienz erreicht werden. Insbesondere kann vorteilhaft eine einfache Montage des Solarmoduls an dem Grundkörper ermöglicht werden.

Die Solarmodulhaltevorrichtung weist zumindest ein weiteres, einstückig, vorzugsweise einteilig, an den Grundkörper angeformtes Solarmodulhalteelement auf, welches zu einer Befestigung und/oder Positionierung eines von dem Solarmodul verschiedenen weiteren Solarmoduls vorgesehen ist. Dadurch kann vorteilhaft eine hohe Montageeffizienz erreicht werden. Insbesondere kann vorteilhaft eine einfache Montage des weiteren Solarmoduls an dem Grundkörper ermöglicht werden. Vorteilhaft können zumindest zwei Solarmodule an der Solarmodulhaltevorrichtung montiert werden. Insbesondere ist, in der Längsrichtung des Grundkörpers gesehen, das Solarmodulhalteelement und/oder das weitere Solarmodulhalteelement in einem Endbereich des Grundkörpers angeordnet. Unter einem "Endbereich" soll insbesondere ein Bereich des Grundkörpers verstanden werden, welcher aus Punkten gebildet ist, die höchstens 30 mm, vorzugsweise höchstens 40 mm und bevorzugt höchstens 50 mm von einem in der Längsrichtung liegenden Ende des Grundkörpers entfernt sind. Besonders bevorzugt ist der Endbereich als zumindest ein Bereich des Grundkörpers ausgebildet, welcher von Punkten gebildet ist, deren Entfernung von einem in der Längsrichtung liegenden Ende des Grundkörpers höchstens 10 % einer maximalen Längserstreckung des Grundkörpers entspricht. Insbesondere ist das Solarmodulhalteelement und/oder das weitere Solarmodulhalteelement an der Auflagefläche des Grundkörpers angeordnet. Das Solarmodulhalteelement und das weitere Solarmodulhalteelement stehen aus der Auflagefläche des Grundkörpers hervor. Das Solarmodulhalteelement und das weitere Solarmodulhalteelement sind jeweils von einer Mittellinie der Auflagefläche nach außen in Richtung der jeweiligen Seitenwandungen versetzt angeordnet, wobei insbesondere eines der Solarmodulhalteelemente näher zu einer Seitenwandung angeordnet ist und das andere der Solarmodulhalteelemente näher zu der gegenüberliegenden Seitenwandung angeordnet ist. Insbesondere ist das Solarmodulhalteelement und/oder das weitere Solarmodulhalteelement in einem Bereich der Auflagefläche angeordnet, in dem die Auflagefläche eine maximale Breite aufweist. Insbesondere sind das Solarmodulhalteelement und/oder das weitere Solarmodulhalteelement außerhalb des Verjüngungsbereichs angeordnet. Die Solarmodulhalteelemente sind jeweils dazu vorgesehen, eine Formschlussverbindung mit jeweils einem Solarmodul herzustellen. Insbesondere sind die Solarmodulhalteelemente dazu vorgesehen, in eine zu den Solarmodulhalteelementen korrespondierende Ausnehmung der Solarmodule formschlüssig einzugreifen. Insbesondere sind die Solarmodulhalteelemente in einer Ebene der Auflagefläche in eine Richtung senkrecht zu der Längsrichtung der Auflagefläche zumindest 40 mm, vorzugsweise zumindest 49 mm, vorteilhaft zumindest 55 mm, bevorzugt zumindest 61 mm und besonders bevorzugt höchstens 70 mm voneinander beabstandet. Unter einer "Befestigung" soll insbesondere eine Einhängung und/oder eine Vormontage, insbesondere zu einer Vorpositionierung für eine Endmontage, verstanden werden. Unter einer Positionierung soll insbesondere eine Ausrichtung und/oder die Vorpositionierung verstanden werden.

Die Solarmodulhalteelemente sind hakenförmig ausgebildet. Dadurch kann vorteilhaft eine hohe Montageeffizienz erreicht werden, insbesondere indem eine einfache, vorzugsweise werkzeuglose, Montage, insbesondere Vormontage, und/oder Positionierung der Solarmodule an dem Grundkörper ermöglicht werden kann. Vorteilhaft kann dadurch ein Formschluss zwischen dem Grundkörper und dem Solarmodul hergestellt werden. Insbesondere steht das hakenförmige Solarmodulhalteelement zumindest im Wesentlichen senkrecht aus der Auflagefläche des Grundkörpers hervor. Vorzugsweise bildet das hakenförmige Solarmodulhalteelement eine Anschlagfläche für ein Solarmodul aus, welche zumindest im Wesentlichen senkrecht zu der Auflagefläche angeordnet ist. Insbesondere steht das Solarmodulhalteelement zumindest 4 mm, vorzugsweise zumindest 6 mm und bevorzugt zumindest 8 mm über der Auflagefläche hervor. Unter einem "hakenförmigen" Solarhalteelement soll insbesondere ein Solarhalteelement verstanden werden, welches derart geschwungen oder derart eckig gekrümmt ist, dass in zumindest einer Orientierung des Solarhalteelements eine Last in das Solarhalteelement einhängbar ist. Insbesondere weisen die Enden der hakenförmigen Solarhalteelemente in die Längsrichtung der Auflagefläche. Insbesondere weisen die Enden der hakenförmigen Solarhalteelemente in eine von der Mitte der Auflagefläche wegweisende Richtung.

Zusätzlich wird vorgeschlagen, dass die Solarmodulhaltevorrichtung zumindest ein einstückig, vorzugsweise einteilig, an den Grundkörper angeformtes Potentialausgleichselement, insbesondere Erdungselement, aufweist, welches zu einer elektrischen Kontaktierung, insbesondere Erdung, eines Solarmoduls vorgesehen ist. Dadurch kann vorteilhaft eine hohe Effizienz, insbesondere in Bezug auf eine Montage und/oder auf einen Materialverbrauch erreicht werden.

Einerseits kann vorteilhaft auf besonders einfache Weise eine notwendige Erdung eines montierten Solarmoduls erreicht werden. Dadurch können vorteilhaft Kosten reduziert werden. Andererseits kann vorteilhaft eine notwendige Erdung des montierten Solarmoduls ohne eine Notwendigkeit von zusätzlichen Bauteilen bewerkstelligt werden. Vorteilhaft kann eine hohe Betriebssicherheit gewährleistet werden. Unter einem "Potentialausgleichselement" soll insbesondere ein Element verstanden werden, welches dazu vorgesehen ist, einen Potentialausgleich zwischen dem Solarmodul, insbesondere einem Rahmen des Solarmoduls, und dem Grundkörper, insbesondere der Erde, herzustellen. Insbesondere ist der Grundkörper zumindest in dem montierten Zustand geerdet. Insbesondere befindet sich der Grundkörper in dem montierten Zustand auf einem Erdpotential.

Des Weiteren wird vorgeschlagen, dass die Solarmodulhaltevorrichtung zumindest ein weiteres, einstückig, insbesondere einteilig, an den Grundkörper angeformtes Potentialausgleichselement, insbesondere weiteres Erdungselement, welches zu einer elektrischen Kontaktierung, insbesondere Erdung, eines von dem Solarmodul verschiedenen weiteren Solarmoduls vorgesehen ist. Dadurch kann vorteilhaft eine einfache und materialsparende Erdung eines weiteren Solarmoduls durch die Solarmodulhaltevorrichtung ermöglicht werden. Insbesondere ist, in der Längsrichtung des Grundkörpers gesehen, das Potentialausgleichselement und/oder das weitere Potentialausgleichselement in dem Endbereich des Grundkörpers angeordnet. Besonders bevorzugt sind die Potentialausgleichselemente an einer in der Längsrichtung außenliegenden Kante des Grundkörpers angeordnet. Insbesondere ist das Potentialausgleichselement und/oder das weitere Potentialausgleichselement an der Auflagefläche des Grundkörpers angeordnet. Insbesondere steht das Potentialausgleichselement und/oder das weitere Potentialausgleichselement aus der Auflagefläche des Grundkörpers hervor. Insbesondere sind das Potentialausgleichselement und/oder das weitere Potentialausgleichselement jeweils von einer Mittellinie der Auflagefläche nach außen in Richtung der jeweiligen Seitenwände versetzt angeordnet, wobei insbesondere eines der Potentialausgleichselemente näher zu einer Seitenwandung angeordnet ist und das andere der Potentialausgleichselemente näher zu der gegenüberliegenden Seitenwandung angeordnet ist. Insbesondere ist das Potentialausgleichselement und/oder das weitere Potentialausgleichselement in einem Bereich der Auflagefläche angeordnet, in dem die Auflagefläche eine maximale Breite aufweist. Insbesondere sind das Potentialausgleichselement und/oder das weitere Potentialausgleichselement außerhalb des Verjüngungsbereichs angeordnet. Insbesondere sind die Potentialausgleichselemente in einer Ebene der Auflagefläche in eine Richtung senkrecht zu der Längsrichtung der Auflagefläche zumindest 40 mm, vorzugsweise zumindest 49 mm, vorteilhaft zumindest 55 mm, bevorzugt zumindest 61 mm und besonders bevorzugt höchstens 70 mm voneinander beabstandet. Insbesondere sind die Potentialausgleichselemente und die Solarmodulhalteelemente an in der Längsrichtung gegenüberliegenden Enden des Grundkörpers angeordnet. Insbesondere ist denkbar, dass der Grundkörper mehr als zwei, insbesondere einteilig mit dem Grundkörper ausgebildete, Solarmodulhalteelemente und/oder Potentialausgleichselemente aufweist.

Wenn das/die Potentialausgleichselement/e, vorzugsweise das/die Erdungselement/e, zumindest eine aus der Auflagefläche, insbesondere zumindest im Wesentlichen senkrecht, hervorstehende Spitze ausbildet/ausbilden, welche insbesondere dazu vorgesehen ist, eine Oberflächenschicht des auf der Auflagefläche aufliegenden Solarmoduls, beispielsweise eine Eloxalschicht des Solarmoduls, zu durchdringen, kann vorteilhaft ein besonders einfach zu montierender und/oder besonders materialsparender Potentialausgleich zwischen dem Grundkörper und einem oder zwei Solarmodulen in dem montierten Zustand erreicht werden. Insbesondere steht die Spitze mindestens 1 mm über die Auflagefläche nach oben hervor.

Wenn der Grundkörper, insbesondere auf der Auflagefläche, zumindest ein Gewindeloch aufweist, kann vorteilhaft eine hohe Montageeffizienz erreicht werden. Insbesondere kann vorteilhaft eine einfache Endmontage von Solarmodulen, welche insbesondere in einem Vormontageschritt in die Solarmodulhalteelemente eingehängt wurden, an dem Grundkörper erreicht werden. Vorteilhaft sind dadurch für eine Montage keine Gegenstücke, wie beispielsweise Muttern notwendig, wodurch auf vorteilhafte Weise eine Montage, insbesondere Endmontage, der Solarmodule an den Solarmodulhaltevorrichtungen von nur einer Seite der Solarmodule aus, insbesondere von einer Oberseite der Solarmodule aus, durchführbar ist. Insbesondere ist in der Längsrichtung des Grundkörpers gesehen, das Gewindeloch in dem Endbereich des Grundkörpers angeordnet. Insbesondere ist das Gewindeloch auf einer, vorzugsweise die Auflagefläche halbierenden, Mittellinie der Auflagefläche angeordnet. Insbesondere ist das Gewindeloch in einem Bereich der Auflagefläche angeordnet, in dem die Auflagefläche eine maximale Breite aufweist. Insbesondere ist das Gewindeloch außerhalb des Verjüngungsbereichs angeordnet. Insbesondere weist das Gewindeloch ein Innengewinde auf. Insbesondere bildet das Gewindeloch ein M6, ein M7, ein M8, ein M9 oder ein M10 Gewinde aus. Insbesondere weist der Grundkörper ein weiteres Gewindeloch auf. Insbesondere sind die Gewindelöcher entlang der Längsrichtung gesehen an gegenüberliegenden Enden des Grundkörpers angeordnet. Insbesondere sind die Gewindelöcher zumindest im Wesentlichen identisch zueinander ausgebildet. Insbesondere ist denkbar, dass der Grundkörper mehr als zwei Gewindelöcher aufweist.

Ferner wird vorgeschlagen, dass der Grundkörper ein, insbesondere einstückig, vorzugsweise einteilig mit dem Grundkörper ausgebildetes, Versteifungselement aufweist, welches in einem Nahbereich des Gewindelochs angeordnet ist und dazu vorgesehen ist, den Grundkörper zumindest in dem Nahbereich des Gewindelochs zu versteifen. Dadurch kann vorteilhaft eine besonders hohe Stabilität erreicht werden. Insbesondere ist das Versteifungselement als zumindest eine Sicke, vorzugsweise als zumindest zwei Sicken, ausgebildet, welche insbesondere das Gewindeloch in der Ebene der Auflagefläche zumindest teilweise umgreifen. Insbesondere ist das Versteifungselement mindestens 2 mm tief. Insbesondere weist jedes Gewindeloch ein separates Versteifungselement auf. Unter einem "Nahbereich" soll insbesondere ein Bereich verstanden werden, welcher aus Punkten gebildet ist, die einen Abstand von dem Gewindeloch aufweisen, welcher kleiner ist als ein vierfacher, vorzugsweise dreifacher Öffnungsdurchmesser des Gewindelochs.

Wenn zudem die Auflagefläche zumindest eine zentral in dem Grundkörper angeordnete Sicke zu einer Versteifung des Grundkörpers aufweist, kann vorteilhaft eine besonders hohe Stabilität bei einem gleichzeitig minimierten Materialverbrauch erreicht werden. Insbesondere ist die Sicke mindestens 2,5 mm tief. Insbesondere ist die Sicke mindestens 200 mm lang. Insbesondere ist die Sicke in den Endbereichen der Sicke flach auslaufend ausgebildet. Insbesondere ist eine Steigung der Sicke in den flach auslaufenden Endbereichen kleiner als 45°, vorzugsweise kleiner als 35°. Dadurch kann vorteilhaft erreicht werden, dass bei einer 45° Neigung des Grundkörpers relativ zu einer ebenen Erdoberfläche in der Sicke angesammeltes Regenwasser vollständig abläuft. Insbesondere ist denkbar, dass der Grundkörper mehr als eine Sicke zu einer Versteifung des Grundkörpers aufweist.

Zudem wird vorgeschlagen, dass der Grundkörper zumindest eine Ausnehmung zu einer Aufnahme einer Blindniet aufweist, welche relativ zu einer parallel zu einer Längsrichtung des Grundkörpers verlaufenden Mittelachse des Grundkörpers seitlich versetzt angeordnet ist. Dadurch kann vorteilhaft eine besonders einfache und stabile Montage der Solarmodule an dem Grundkörper ermöglicht werden. Insbesondere kann die Montage mittels der Blindniet alternativ oder zusätzlich zu der Montage mittels des Gewindelochs erfolgen. Die Ausnehmung zur Aufnahme der Blindniet ist insbesondere als ein Loch in der Auflagefläche ausgebildet. Insbesondere weist der Grundkörper eine weitere Ausnehmung zu einer Aufnahme einer weiteren Blindniet auf, welche relativ zu einer parallel zu einer Haupterstreckungsrichtung des Grundkörpers verlaufenden Mittelachse des Blechteils umgekehrt seitlich versetzt angeordnet ist wie die, insbesondere zuvor beschriebene, Ausnehmung zur Aufnahme der Blindniet. Insbesondere sind die Ausnehmungen zur Aufnahme der Blindnieten in dem Verjüngungsbereich des Grundkörpers angeordnet. Insbesondere sind die Ausnehmungen zur Aufnahme der Blindnieten in der Längsrichtung auf gegenüberliegenden Seiten der Mitte des Grundkörpers angeordnet. Insbesondere erfordert eine Blindniet zu einer Montage vorteilhaft nur einen Zugang von einer Seite, wodurch weiterhin vorteilhaft eine Montage der Solarmodule an dem Grundkörper ausschließlich von einer Oberseite der Solarmodule aus möglich bleibt.

Zusätzlich wird vorgeschlagen, dass der Grundkörper zumindest im Wesentlichen, insbesondere mit Ausnahme von Ausnehmungen zur Aufnahme von Blindnieten, spiegelsymmetrisch ausgebildet ist. Dadurch kann vorteilhaft eine hohe Montageeffizienz erreicht werden, insbesondere indem bei einer Montage die Solarmodulhaltevorrichtung beliebig um 180° gedreht werden kann. Dadurch können vorteilhaft Montagefehler vermieden und eine Montage kann insgesamt beschleunigt werden. Insbesondere ist der Grundkörper spiegelsymmetrisch zu zumindest zwei Spiegelebenen ausgebildet. Insbesondere wird eine erste Spiegelebene durch eine die Auflagefläche in der Längsrichtung halbierende Mittellinie und durch eine Senkrechte auf die Auflagefläche aufgespannt. Insbesondere wird eine zweite Spiegelebene durch eine die Auflagefläche senkrecht zu der Längsrichtung halbierende weitere Mittellinie und durch die Senkrechte auf die Auflagefläche aufgespannt.

Wenn außerdem der Grundköper eine Antikorrosionsschutzbeschichtung aufweist, kann vorteilhaft eine hohe Lebensdauer erreicht werden. Insbesondere weist der Grundkörper eine Feuerverzinkung und/oder eine Zn-Al-Mg-Beschichtung, beispielsweise eine Magnelis^{®}-Beschichtung auf.

Des Weiteren wird vorgeschlagen, dass die Solarmodulhaltevorrichtung die Achsenmontageklammer aufweist, welche zu einer verdrehsicheren Montage des Grundkörpers an der Achse vorgesehen ist. Dadurch kann vorteilhaft eine effiziente und einfache Montage der Solarmodulhaltevorrichtung auf der Achse ermöglicht werden. Zudem kann vorteilhaft sichergestellt werden, dass die mittels der Solarmodulhaltevorrichtung montierten Solarmodule einer Rotationsbewegung der Achse folgen können. Die Achsenmontageklammer umfasst zumindest zwei Klammerelemente, welche dazu vorgesehen sind, bei einer Montage zusammengefügt zu werden, um die Achse zumindest auf einer Hälfte eines Umfangs der Achse zu umgreifen.

Außerdem wird ein Solarpark mit einer Mehrzahl an Solarmodulhaltevorrichtungen, mit zumindest einer Achse und mit einer Mehrzahl an Solarmodulen sowie ein Verfahren zu einer Herstellung des Grundkörpers der Solarmodulhaltevorrichtung vorgeschlagen, wobei zumindest ein Solarmodulhalteelement und zumindest ein weiteres Solarmodulhalteelement jeweils von einer Mittellinie einer Auflagefläche des Grundkörpers nach außen in Richtung von Seitenwandungen des Grundkörpers versetzt einstückig an dem Grundkörper angeformt werden.

Dadurch, dass bei einer Herstellung des Grundkörpers ein Blechverschnitt von weniger als 15 %, vorzugsweise weniger als 10 %, bevorzugt weniger als 7 % und besonders bevorzugt weniger als 5 % eines, insbesondere flachen und ausnehmungsfreien, Ausgangsblechs erzeugt wird, kann vorteilhaft eine hohe Effizienz hinsichtlich eines Materialverbrauchs und/oder hinsichtlich eines Energieverbrauchs erreicht werden. Insbesondere können dadurch vorteilhaft Stückzahlkosten niedrig gehalten werden. Insbesondere ist ein Blechverschnitt auf die Gewindelöcher, auf die Ausnehmungen zu einer Aufnahme einer Blindniet, auf höchstens zwei Ausstoßlöcher zu einem Ausstoßen des Grundkörpers aus einer Biegevorrichtung und/oder auf den Bereich der Achsenauflageelemente beschränkt.

Ferner wird vorgeschlagen, dass der Grundkörper mittels eines Pressverfahrens hergestellt wird, wobei höchstens 10 %, vorzugsweise höchstens 5 % und bevorzugt höchstens 3 % einer Gesamtfläche eines Metallblechs, aus dem der Grundkörper hergestellt wird, bei einem Pressvorgang des Pressverfahrens einer wesentlichen Zugspannung ausgesetzt wird und/oder wobei auf höchstens 10 %, vorzugsweise höchstens 5 % und bevorzugt höchstens 3 % einer Gesamtfläche des Metallblechs, aus dem der Grundköper hergestellt wird, bei dem Pressvorgang des Pressverfahrens eine Materialstärke des Metallblechs wesentlich verändert wird. Dadurch kann vorteilhaft eine besonders hohe Stabilität der Solarmodulhaltevorrichtung erreicht werden. Zudem kann vorteilhaft eine besonders hohe Effizienz hinsichtlich eines Materialverbrauchs erreicht werden. Insbesondere indem bei einer Wahl einer gewünschten Endwandstärke keine Wandstärkenreduzierungen durch ein Zugspannen eines Ausgangsblechs miteinberechnet werden müssen. Dadurch können vorteilhaft Abweichungen von Wandstärken verschiedener Solarmodulhaltevorrichtungen gering gehalten werden. Unter einer "wesentlichen Zugspannung" soll insbesondere eine Zugspannung verstanden werden, welche eine wesentliche Änderung einer Materialstärke eines bearbeiteten Metallblechs hervorruft. Unter einer "wesentlichen Änderung" einer Materialstärke des Metallblechs soll insbesondere eine Änderung, insbesondere eine Reduzierung der Materialstärke des Metallblechs um mehr als 10 %, vorzugsweise um mehr als 7 %, bevorzugt um mehr als 5 % und besonders bevorzugt um mehr als 3 % verstanden werden.

Die erfindungsgemäße Solarmodulhaltevorrichtung, der erfindungsgemäße Solarpark und das erfindungsgemäße Verfahren sollen hierbei nicht auf die oben beschriebene Anwendung und Ausführungsform beschränkt sein. Insbesondere kann die erfindungsgemäße Solarmodulhaltevorrichtung, der erfindungsgemäße Solarpark und das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer schematischen Darstellung eines Solarparks mit einer Mehrzahl an Solarmodulen und mit einer Mehrzahl an Solarmodulhaltevorrichtungen,
- Fig. 2: eine schematische perspektivische Ansicht der Solarmodulhaltevorrichtung, welche mit einem Solarmodul und mit einer Achse verbunden ist,
- Fig. 3: eine schematische Seitenansicht eines mittels einer Achsenmontageklammer an die Achse montierten Grundkörpers der Solarmodulhaltevorrichtung,
- Fig. 4a: eine schematische Draufsicht auf den Grundkörper,
- Fig. 4b: eine schematische Vorderansicht des Grundkörpers und
- Fig. 5: ein Ablaufdiagramm eines Verfahrens zu einer Herstellung des Grundkörpers.

### Beschreibung des Ausführungsbeispiels

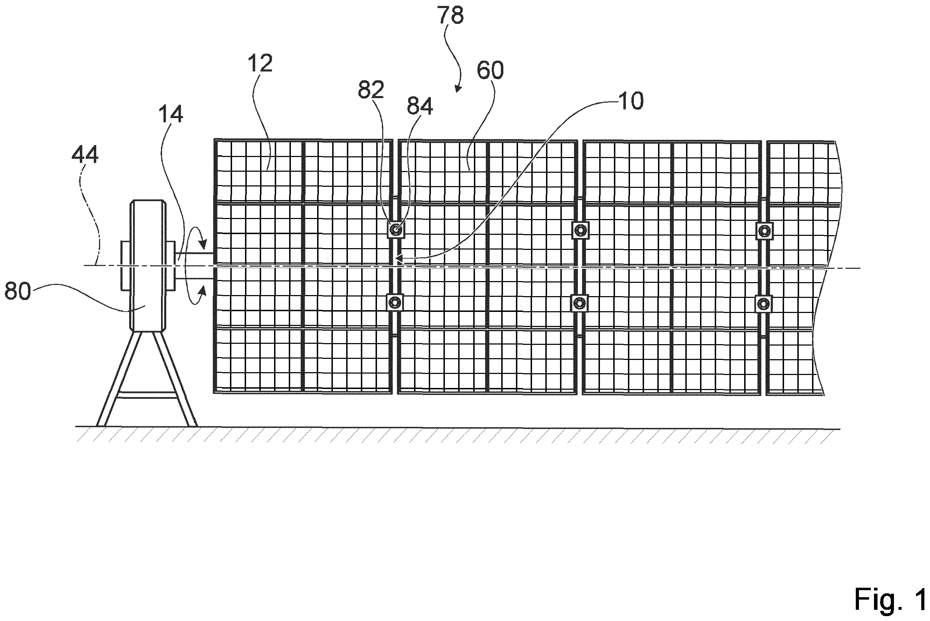

Fig. 1 zeigt einen Teil eines Solarparks 78 mit einer Mehrzahl an Solarmodulen 12, 60. Die Solarmodule 12, 60 sind derart bewegbar, dass sie zumindest im Wesentlichen einem Sonnenstand folgen können. Die Solarmodule 12, 60 sind sonnenstandfolgend ausgebildet. Der Solarpark 78 umfasst zumindest eine Achse 14. Die Solarmodule 12, 60 sind mit einer Achse 14 gekoppelt. Der Solarpark 78 umfasst eine Antriebseinheit 80. Die Achse 14 ist mittels der Antriebseinheit 80 rotatorisch in zwei Rotationsrichtungen um eine zu einer Längsrichtung 44 der Achse 14 parallele Längsachse der Achse 14 rotierbar. Die Achse 14 ist dazu vorgesehen, eine Rotation der Antriebseinheit 80 auf die Solarmodule 12, 60 zu übertragen.

Der Solarpark 78 umfasst eine Mehrzahl an Solarmodulhaltevorrichtungen 10. Die Solarmodule 12, 60 sind mittels einer Mehrzahl an Befestigungsplättchen 82 und Befestigungsschrauben 84 an den Solarmodulhaltevorrichtungen 10 befestigt. Die Solarmodulhaltevorrichtungen 10 sind dazu vorgesehen, eine Montage der sonnenstandfolgenden Solarmodule 12, 60 mit der rotierbaren Achse 14 zu ermöglichen. Die Achse 14 ist als ein Holm mit einem im Wesentlichen hexagonalen Querschnitt ausgebildet. Dadurch kann vorteilhaft eine Übertragung einer Rotationsbewegung mittels der Achse 14 vereinfacht werden. Die Achse 14 ist in einem Inneren hohl.

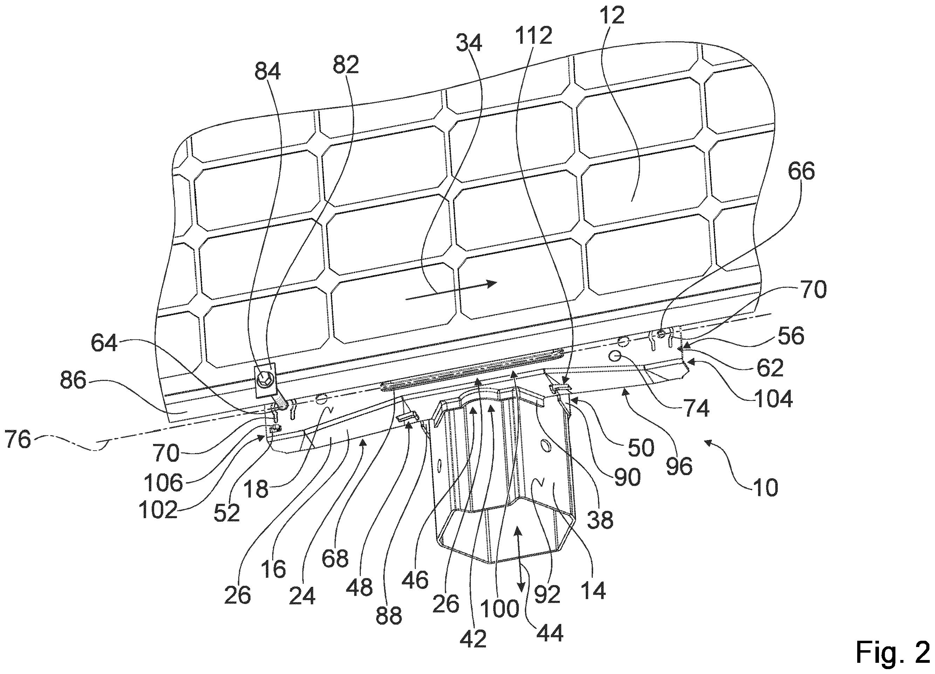

Fig. 2 zeigt eine perspektivische Ansicht der mit einem Solarmodul 12 und mit der Achse 14 gekoppelten Solarmodulhaltevorrichtung 10. Die Solarmodulhaltevorrichtung 10 weist einen Grundkörper 16 auf. Der Grundkörper 16 bildet eine Auflagefläche 18 aus. Die Auflagefläche 18 ist zu einer Auflage zumindest eines Teils des Solarmoduls 12 auf den Grundkörper 16 vorgesehen. Der Grundkörper 16 ist als ein Blechteil ausgebildet. Der Grundkörper 16 ist als ein einteiliges Blechteil ausgebildet. Der Grundkörper 16 weist eine Antikorrosionsschutzbeschichtung auf. Das Solarmodul 12 liegt in einem montierten Zustand derart auf der Auflagefläche 18 auf, dass eine Kante 86 des Solarmoduls 12 parallel zu einer in Längsrichtung 34 der Auflagefläche 18 verlaufenden Mittelachse 76 der Auflagefläche 18 verläuft. In der Zeichnung von Fig. 2 verdeckt das Solarmodul 12 ungefähr eine Hälfte der Auflagefläche 18. Beispielhaft ist auf der linken Seite der Fig. 2 gezeigt, wie das Solarmodul 12 mittels des Befestigungsplättchens 82 und der Befestigungsschraube 84 an den Grundkörper 16 geklemmt ist. Das Befestigungsplättchen 82 ist zudem dazu vorgesehen, zugleich ein weiteres, auf der anderen Hälfte der Auflagefläche 18 aufliegendes benachbartes Solarmodul 60 (in Fig. 2 nicht gezeigt) festzuklemmen.

Der Grundkörper 16 weist ein Gewindeloch 64 auf. Der Grundkörper 16 weist ein weiteres Gewindeloch 66 auf. Die Gewindelöcher 64, 66 sind auf der Auflagefläche 18 angeordnet. Die Gewindelöcher 64, 66 weisen jeweils ein Innengewinde auf. Das in den Figuren beispielhaft gezeigte Innengewinde ist für eine Aufnahme einer M8 Schraube vorgesehen. Die Gewindelöcher 64, 66 sind zu einer Aufnahme jeweils einer Befestigungsschraube 84 vorgesehen. Die Gewindelöcher 64, 66 sind mittig in Endbereichen 102, 104 des Grundkörpers 16 in der Auflagefläche 18 angeordnet. Die Gewindelöcher 64, 66 weisen einen Abstand entlang der Längsrichtung 34 voneinander von 400 mm auf. Mittels eines Einschraubens der Befestigungsschrauben 84 in die Gewindelöcher 64, 66 von einer Oberseite der Solarmodule 12, 60 aus werden die Solarmodule 12, 60 mit dem Grundkörper 16 verspannt. Der Grundkörper 16 weist Versteifungselemente 70 auf. Die Versteifungselemente 70 sind als Sicken ausgebildet. Die Versteifungselemente 70 sind jeweils in Nahbereichen der Gewindelöcher 64, 66 angeordnet. Die Versteifungselemente 70 sind dazu vorgesehen, den Grundkörper 16 zumindest in den Nahbereichen der Gewindelöcher 64, 66 zu versteifen.

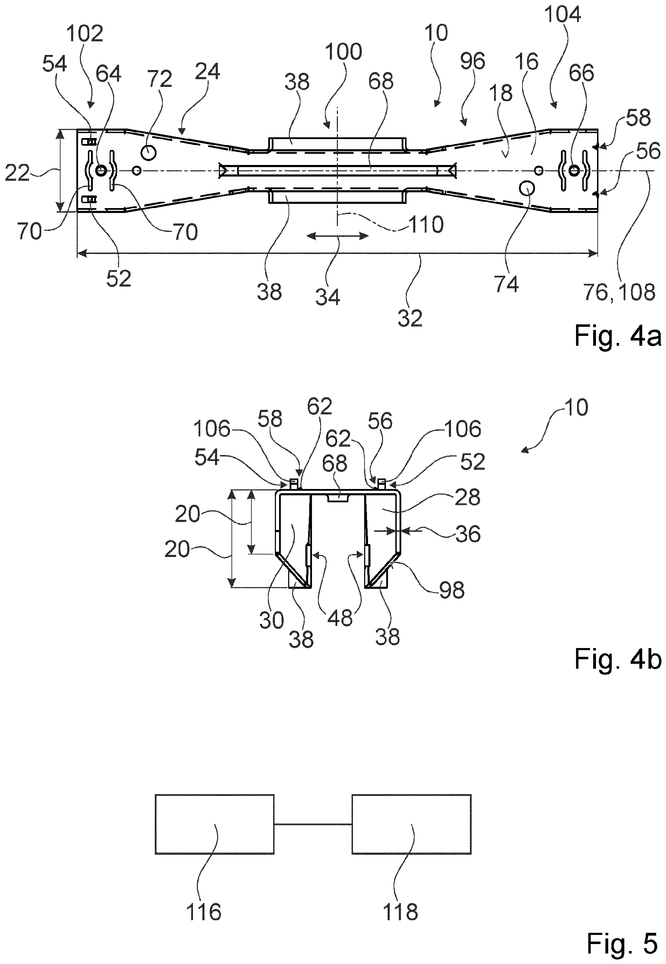

Der Grundkörper 16 weist eine Höhe 20 auf (vgl. Fig. 4b). Die Höhe 20 des Grundkörpers 16 entspricht einer Erstreckung des Grundkörpers 16 senkrecht zu der Auflagefläche 18. Die Höhe 20 des Grundkörpers 16 variiert entlang der Längsrichtung 34 des Grundkörpers 16. Im in den Figuren dargestellten Fall beträgt eine maximale Höhe 20 etwa 55 mm. Der Grundkörper 16 weist eine Breite auf. Die Auflagefläche 18 weist eine Breite 22 auf (vgl. Fig. 4a). Die Breite des Grundkörpers entspricht der Breite 22 der Auflagefläche. Die Breite 22 der Auflagefläche 18 variiert entlang der Längsrichtung 34 des Grundkörpers 16. Im in den Figuren dargestellten Fall beträgt eine maximale Breite 22 der Auflagefläche 18 etwa 70 mm. Die Höhe 20 des Grundkörpers 16 und die Breite 22 der Auflagefläche 18 des Grundkörpers 16 antikorrelieren abschnittsweise entlang der Längsrichtung 34 des Grundkörpers 16.

Der Grundkörper 16 weist einen Verjüngungsbereich 24 auf. Der Grundkörper 16 weist einen weiteren Verjüngungsbereich 96 auf. Innerhalb des Verjüngungsbereichs 24, 96 verjüngt sich die Auflagefläche 18 zu einer Mitte 26 des Grundkörpers 16 hin. Innerhalb des Verjüngungsbereichs 24, 96 verringert sich die Breite 22 der Auflagefläche 18 zu der Mitte 26 des Grundkörpers 16 hin. In dem in den Figuren gezeigten Beispiel verringert sich die Breite 22 der Auflagefläche 18 innerhalb des Verjüngungsbereichs 24, 96 von 70 mm zu 35 mm. Innerhalb des Verjüngungsbereichs 24, 96 nimmt die Höhe 20 des Grundkörpers 16 zu der Mitte 26 des Grundkörpers 16 hin zu. In dem in den Figuren gezeigten Beispiel nimmt die Höhe 20 des Grundkörpers 16 innerhalb des Verjüngungsbereichs 24, 96 von 35 mm zu 55 mm zu. Gesamtlängen von Abwicklungen senkrecht zu der Längsrichtung 34 des Grundkörpers 16 angefertigter Schnitte sind in dem Verjüngungsbereich 24 zumindest im Wesentlichen konstant. Die Auflagefläche 18 weist eine Sicke 68 auf. Die Sicke 68 ist zu einer Versteifung des Grundkörpers 16 vorgesehen. Die Sicke 68 ist zentral in dem Grundkörper 16 angeordnet. Die Sicke 68 ist zentral in der Auflagefläche 18 angeordnet. Die Sicke 68 erstreckt sich zwischen den Verjüngungsbereichen 24, 96. Die Sicke 68 erstreckt sich parallel zu der Längsrichtung 34. Die Sicke 68 ist in einem Mittelbereich 100 des Grundkörpers 16 angeordnet. Die in den Figuren beispielhaft gezeigte Sicke 68 weist eine Länge parallel zu der Längsrichtung 34 von 200 mm, eine Breite senkrecht zu der Längsrichtung 34 von 8 mm und eine Tiefe senkrecht zu der Auflagefläche 18 von 2 mm auf.

Die Solarmodulhaltevorrichtung 10 weist ein Solarmodulhalteelement 52 auf. Das Solarmodulhalteelement 52 ist zu einer Befestigung und/oder zu einer Positionierung des Solarmoduls 12 vorgesehen. Die Solarmodulhaltevorrichtung 10 weist ein weiteres Solarmodulhalteelement 54 auf. Das weitere Solarmodulhalteelement 54 ist zu einer Befestigung und/oder zu einer Positionierung des von dem Solarmodul 12 verschiedenen weiteren Solarmoduls 60 vorgesehen. Das Solarmodulhalteelement 52 und/oder das weitere Solarmodulhalteelement 54 ist/sind einstückig an den Grundkörper 16 angeformt. Das Solarmodulhalteelement 52 und/oder das weitere Solarmodulhalteelement 54 ist/sind einteilig mit dem Grundkörper 16 ausgebildet. Das/die Solarmodulhalteelement/e 52, 54 ist/sind hakenförmig ausgebildet. Die Solarmodulhalteelemente 52, 54 dienen zu einem Einhängen jeweils eines der Solarmodule 12, 60 bei einer Montage des Solarparks 78. Das Solarmodulhalteelement 52, 54 ist zumindest im Wesentlichen senkrecht aus der Auflagefläche 18 herausgebogen. Das Solarmodulhalteelement 52, 54 ist in dem ersten Endbereich 102 des Grundkörpers 16 angeordnet. Die Solarmodulhalteelemente 52, 54 weisen jeweils eine Spitze 106 auf. Die Spitzen 106 der Solarmodulhalteelemente 52, 54 sind erneut um etwa 90° relativ zu dem senkrecht aus der Auflagefläche 18 herausgebogenen Bereichen der Solarmodulhalteelemente 52, 54 abgebogen. Die Spitzen 106 zeigen jeweils in eine Richtung, welche parallel zu der Längsrichtung 34 verläuft. Die Spitzen 106 zeigen jeweils weg von der Mitte 26 des Grundkörpers 16. Die in den Figuren beispielhaft gezeigten Solarmodulhalteelemente 52, 54 stehen 6 mm nach oben über die Auflagefläche 18 hervor. Die in den Figuren beispielhaft gezeigten Spitzen 106 der Solarmodulhalteelemente 52, 54 erstrecken sich über 3,5 mm parallel zu der Auflagefläche 18. Die in den Figuren beispielhaft gezeigten Solarmodulhalteelemente 52, 54 weisen eine Breite senkrecht zu der Längsrichtung 34 von 5 mm auf. Die in den Figuren beispielhaft gezeigten Solarmodulhalteelemente 52, 54 sind in einer Richtung senkrecht zu der Längsrichtung 34 um 49 mm voneinander beabstandet. Jeweils eines der in den Figuren beispielhaft gezeigten Solarmodulhalteelemente 52, 54 ist in einer Richtung senkrecht zu der Längsrichtung 34 etwa 8 mm von einer jeweiligen näherliegenden Seitenwandung 28, 30 beabstandet.

Die Solarmodulhaltevorrichtung 10 weist ein Potentialausgleichselement 56 auf. Das Potentialausgleichselement 56 ist zu einer elektrischen Kontaktierung des mittels der Solarmodulhaltevorrichtung 10 montierten Solarmoduls 12 vorgesehen, so dass das Solarmodul 12 und der Grundkörper 16 ein identisches Grundpotential aufweisen. Das Potentialausgleichselement 56 ist zu einer Erdung des Solarmoduls 12 vorgesehen. Die Solarmodulhaltevorrichtung 10 weist ein weiteres Potentialausgleichselement 58 auf. Das weitere Potentialausgleichselement 58 ist zu einer elektrischen Kontaktierung des weiteren mittels der Solarmodulhaltevorrichtung 10 montierten Solarmoduls 60 vorgesehen, so dass das weitere, von dem Solarmodul 12 verschiedene, Solarmodul 60 und der Grundkörper 16 ein identisches Grundpotential aufweisen. Dadurch weisen auch beide Solarmodule 12, 60 identische Grundpotentiale auf. Das weitere Potentialausgleichselement 58 ist zu einer Erdung des weiteren, von dem Solarmodul 12 verschiedenen Solarmodul 60 vorgesehen. Die Potentialausgleichselemente 56, 58 sind einstückig an den Grundkörper 16 angeformt. Die Potentialausgleichselemente 56, 58 sind einteilig mit dem Grundkörper 16 ausgebildet. Die Potentialausgleichselemente 56, 58 sind in dem zweiten Endbereich 104 des Grundkörpers 16 angeordnet. Die Potentialausgleichselemente 56, 58 bilden jeweils eine Spitze 62 aus. Die Spitzen 62 der Potentialausgleichselemente 56, 58 stehen aus der Auflagefläche 18 hervor. Die in den Figuren beispielhaft gezeigten Spitzen 62 der Potentialausgleichselemente 56, 58 stehen 1 mm über die Auflagefläche 18 hervor. Die in den Figuren beispielhaft gezeigten Spitzen 62 der Potentialausgleichselemente 56, 58 sind in der Richtung senkrecht zu der Längsrichtung 34 etwa 40 mm voneinander beabstandet. Die Potentialausgleichselemente 56, 58 sind dazu vorgesehen, eine Oberflächenschicht des jeweiligen in einem Bereich des jeweiligen Potentialausgleichselements 56, 58 auf der Auflagefläche 18 aufliegenden Solarmoduls 12, 60 zu durchdringen. Die von den Potentialausgleichselementen 56, 58 zu durchdringende Oberflächenschicht der Solarmodule 12, 60 kann beispielsweise als eine Eloxalschicht ausgebildet sein.

Der Grundkörper 16 weist zumindest zwei Ausnehmungen 72, 74 zu einer Aufnahme von Blindnieten auf. Die Ausnehmungen 72, 74 zur Aufnahme der Blindnieten sind auf der Auflagefläche 18 angeordnet. Jeweils eine Ausnehmung 72, 74 zu einer Aufnahme einer Blindniet ist in jeweils einem der Verjüngungsbereiche 24, 96 angeordnet. Die Ausnehmungen 72, 74 zu einer Aufnahme von Blindnieten sind relativ zu der parallel zu der Längsrichtung 34 des Grundkörpers 16 verlaufenden Mittelachse 76 des Grundkörpers 16 seitlich versetzt angeordnet (vgl. auch Fig. 4a). In dem in den Figuren bespielhaft gezeigten Grundkörper 16 sind die Ausnehmungen 72, 74 zu einer Aufnahme von Blindnieten um 15 mm seitlich von der Mittelachse 76 versetzt. Die dort gezeigten Ausnehmungen 72, 74 zu einer Aufnahme von Blindnieten sind in der Längsrichtung 34 um 320 mm voneinander beabstandet.

Der Grundkörper 16 weist eine Seitenwandung 28 auf. Der Grundkörper 16 weist eine weitere Seitenwandung 30 auf. Die Seitenwandungen 28, 30 des Grundkörpers 16 sind senkrecht zu der Auflagefläche 18 abgebogen. Die Seitenwandungen 28, 30 sind auf gegenüberliegenden Seiten des Grundkörpers 16 angeordnet. Die Seitenwandungen 28, 30 sind auf den senkrecht zu der Längsrichtung 34 des Grundkörpers 16 liegenden Seiten des Grundkörpers 16 angeordnet. Die Seitenwandungen 28, 30 begrenzen den Grundkörper 16 entlang eines Großteils einer Längserstreckung 32 (vgl. auch Fig. 4a) des Grundkörpers 16 seitlich. Der Grundkörper 16 weist in Randbereichen Kantenflächen 98 auf. In den Bereichen, in denen die Seitenwandungen 28, 30 den Grundkörper 16 seitlich begrenzen, sind die Kantenflächen 98 des Grundkörpers 16 nicht senkrecht zu der Auflagefläche 18 ausgerichtet (vgl. auch Fig. 4b). Ein Großteil des Grundkörpers 16 weist eine konstante Materialstärke 36 auf (vgl. auch Fig. 4b). Die Materialstärken 36 der Seitenwandungen 28, 30 sind im Wesentlichen identisch zu der Materialstärke 36 der Auflagefläche 18. Die Materialstärken 36 in dem Verjüngungsbereich 24, 96 sind im Wesentlichen identisch zu der Materialstärke 36 in dem Mittelbereich 100 des Grundkörpers 16 oder zu den Materialstärken 36 in den Endbereichen 102, 104 des Grundkörpers 16. Eine maximale Längserstreckung 32 der Solarmodulhaltevorrichtung 10, insbesondere des Grundkörpers 16, beträgt vorzugsweise mindestens 350 mm, vorzugsweise mindestens 420 mm und bevorzugt mindestens 430 mm. Besonders bevorzugt, insbesondere in einer alternativen Ausgestaltung der Solarmodulhaltevorrichtung 10, beträgt die maximale Längserstreckung 32 der Solarmodulhaltevorrichtung 10, insbesondere des Grundkörpers 16, mehr als 500 mm, vorzugsweise mehr als 650 mm und besonders bevorzugt mehr als 800 mm.

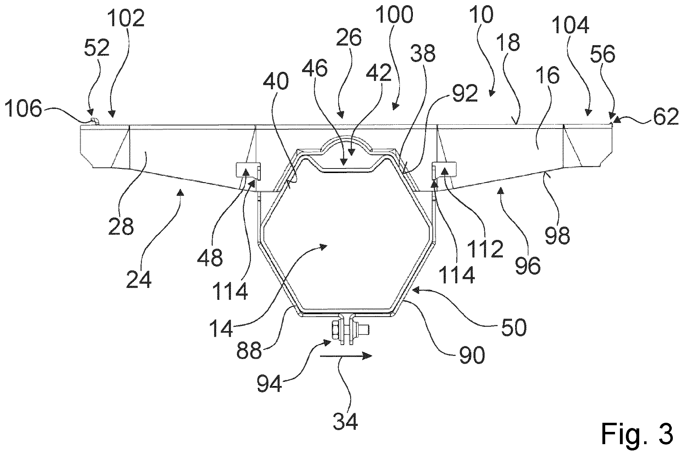

Der Grundkörper 16 bildet ein Achsenauflageelement 38 aus. Das Achsenauflageelement 38 ist zu einer Auflage des Grundkörpers 16 auf eine Oberfläche 92 der Achse 14 vorgesehen. Das Achsenauflageelement 38 bildet eine Achsenauflagefläche 40 aus, welche dazu vorgesehen ist, in dem montierten Zustand auf der Oberfläche 92 der Achse 14 aufzuliegen (vgl. auch Fig. 3). Der Grundkörper 16 bildet auf zwei gegenüberliegenden Seiten jeweils ein Achsenauflageelement 38 aus. Die Seitenwandungen 28, 30 bilden jeweils ein Achsenauflageelement 38 aus. Jeweils ein Achsenauflageelement 38 ist an jeweils einer Seitenwandung 28, 30 angeformt. Die Achsenauflageelemente 38 sind einteilig mit dem Grundkörper 16 ausgebildet. Die Achsenauflageelemente 38 sind im Wesentlichen senkrecht zu den Seitenwandungen 28, 30 abgebogen. Die Achsenauflageelemente 38 stehen im Wesentlichen senkrecht über die Seitenwandungen 28, 30 hervor. Das Achsenauflageelement 38, insbesondere jedes der Achsenauflageelemente 38, weist eine Erstreckung senkrecht zu der Längsrichtung 34 der Auflagefläche 18 des Grundkörpers 16 auf, die einem Vierfachen der Materialstärke 36 des Grundkörpers 16 entspricht. Die Erstreckung des Achsenauflageelements 38 senkrecht zu der Längsrichtung 34 der Auflagefläche 18 des Grundkörpers 16 beträgt im in den Figuren dargestellten Beispiel 10 mm. Die Erstreckung des Achsenauflageelements 38 senkrecht zu der Längsrichtung 34 der Auflagefläche 18 ist konstant. Alternativ könnte die Erstreckung des Achsenauflageelements 38 senkrecht zu der Längsrichtung 34 der Auflagefläche 18 variabel, beispielsweise in einem Kontaktbereich des Achsenauflageelements 38 mit der Achse 14 vergrößert oder verkleinert sein. Die von dem Achsenauflageelement 38 ausgebildete Achsenauflagefläche 40 bildet in einer Seitenansicht auf den Grundkörper 16 (vgl. auch Fig. 3) eine polygonale, insbesondere eine semi-hexagonale, Kontur aus. Die Sicke 68 ist in einem Bereich der Auflagefläche 18 angeordnet, welcher zwischen den zwei Achsenauflageelementen 38 liegt.

Die Solarmodulhaltevorrichtung 10 weist eine Achsenmontageklammer 50 auf. Die Achsenmontageklammer 50 ist dazu vorgesehen, eine verdrehsichere Montage des Grundkörper 16 an der Achse 14 zu ermöglichen. Fig. 3 zeigt eine Seitenansicht des Grundkörpers 16 und der Achsenmontageklammer 50. Die Achsenmontageklammer 50 umfasst zwei Klammerelemente 88, 90. Die Klammerelemente 88, 90 sind getrennt voneinander ausgebildet. Die Klammerelemente 88, 90 sind zumindest im Wesentlichen identisch zueinander ausgebildet. Die Klammerelemente 88, 90 sind in dem in Fig. 3 gezeigten montierten Zustand gespiegelt zueinander angeordnet. Die Achsenmontageklammer 50 ist dazu vorgesehen, die Achse 14 zumindest teilweise zu umgreifen. Die Achsenmontageklammer 50 ist dazu vorgesehen, eine in dem montierten Zustand von dem Grundkörper 16 abgewandte Seite der Achse 14 zu umgreifen. Die Achsenmontageklammer 50 ist dazu vorgesehen, den Grundkörper 16 an einen Teil der Oberfläche 92 der Achse 14 anzupressen. Die Klammerelemente 88, 90 sind mittels einer Schraubverbindung 94 verbindbar. Die Schraubverbindung 94 ist dazu vorgesehen, den Grundkörper 16 und die Achse 14 miteinander zu verspannen.

Die Seitenwandungen 28, 30 weisen jeweils zwei Ausnehmungen 48, 112 auf, welche zu einer Befestigung der Achsenmontageklammer 50 vorgesehen sind. Die Ausnehmungen 48, 112 sind als rechteckige Langlöcher ausgebildet, welche jeweils an ihren der Mitte 26 des Grundkörpers 16 zugewandten Enden einen, eine Breite der jeweiligen Ausnehmung 48, 112 in eine Richtung senkrecht zu der Auflagefläche 18 vergrößernden Absatz 114 ausbilden. Die Klammerelemente 88, 90 der Achsenmontageklammer 50 sind dazu vorgesehen, senkrecht in die Ausnehmungen 48, 112 der Seitenwandungen 28, 30 einzugreifen. Der Absatz 114 ist dazu vorgesehen, die Klammerelemente 88, 90 der Achsenmontageklammer 50 nach einem Anpressen der Achse 14 an den Grundkörper 16 durch ein Anziehen der Schraubverbindung 94 in einer Montageposition zu sichern. Die in Fig. 2 beispielhaft gezeigten Klammerelemente 88, 90 weisen in den in die Ausnehmungen 48, 112 der Seitenwandungen 28, 30 eingreifenden Bereichen eine Hakenform auf, wodurch eine Sicherung der Montageposition weiter verbessert werden kann. Die Ausnehmung 48 zur Aufnahme der Achsenmontageklammer 50 ist teilweise in dem Verjüngungsbereich 24, 96 des Grundkörpers 16 angeordnet. Die Ausnehmung 48 zur Aufnahme der Achsenmontageklammer 50 ist zum Großteil in dem Verjüngungsbereich 24, 96 des Grundkörpers 16 angeordnet. Die Ausnehmung 48 zur Aufnahme der Achsenmontageklammer 50 ist mit Ausnahme des den Absatz 114 aufweisenden Teils der Ausnehmung 48 zur Aufnahme der Achsenmontageklammer 50 in dem Verjüngungsbereich 24, 96 des Grundkörpers 16 angeordnet. Der den Absatz 114 aufweisende Teil der Ausnehmung 48 zur Aufnahme der Achsenmontageklammer 50 ist in zwischen einem den beiden Verjüngungsbereichen 24, 96 liegenden, mittigen Teil des Grundkörpers 16, insbesondere dem Mittelbereich 100 des Grundkörpers 16, angeordnet.

In der Fig. 3 ist zudem gezeigt, dass das Achsenauflageelement 38 einen Teilbereich 42 aufweist, welcher dazu vorgesehen ist, bei einer Auflage des Grundkörpers 16 auf die Achse 14 frei von einem Kontakt mit der Achse 14 zu bleiben und dadurch in der Längsrichtung 44 der Achse 14 einen, insbesondere vergrößerten, Zwischenraum 46 zwischen der Achse 14 und dem Grundkörper 16 bereitstellt. In dem Teilbereich 42 des Achsenauflageelements 38 ist das Achsenauflageelement 38 gewölbt ausgebildet. In dem Teilbereich 42 des Achsenauflageelements 38 ist das Achsenauflageelement 38 in Richtung der Auflagefläche 18 aufgewölbt ausgebildet.

Die Figuren 4a und 4b zeigen verschiedene Ansichten des Grundkörpers 16. Der Grundkörper 16 ist mit Ausnahme der Ausnehmungen 72, 74 zur Aufnahme von Blindnieten spiegelsymmetrisch zu den in der Fig. 4a angedeuteten Spiegelebenen 108, 110 ausgebildet.

Fig. 5 zeigt ein Ablaufdiagramm eines Verfahrens zu einer Herstellung des Grundkörpers 16 der Solarmodulhaltevorrichtung 10. In zumindest einem Verfahrensschritt 116 wird ein zumindest im Wesentlichen rechteckiges und flaches Ausgangsblech bereitgestellt. In zumindest einem weiteren Verfahrensschritt 118 wird das Ausgangsblech gestanzt und gebogen. In dem Verfahrensschritt 118 wird die Materialstärke 36 des Metallblechs zumindest in einem Großteil des Metallblechs erhalten. In dem Verfahrensschritt 118 wird der Grundkörper 16 in seiner endgültigen Form hergestellt. In dem Verfahrensschritt 118 wird bei der Herstellung des Grundkörpers 16 ein Blechverschnitt von weniger als 10 % des Ausgangsblechs erzeugt. In dem Verfahrensschritt 118 wird der Grundkörper 16 mittels eines Pressverfahrens hergestellt. In dem Verfahrensschritt 118 wird bei einem Pressvorgang des Pressverfahrens höchstens 5 % einer Gesamtfläche des Ausgangsblechs, aus dem der Grundkörper 16 hergestellt wird, einer wesentlichen Zugspannung ausgesetzt. In dem Verfahrensschritt 118 wird bei dem Pressvorgang des Pressverfahrens auf höchstens 5 % einer Gesamtfläche des Metallblechs, aus dem der Grundkörper 16 hergestellt wird, eine Materialstärke 36 des Metallblechs verändert.

### Bezugszeichen

- 10: Solarmodulhaltevorrichtung
- 12: Solarmodul
- 14: Achse
- 16: Grundkörper
- 18: Auflagefläche
- 20: Höhe
- 22: Breite
- 24: Verjüngungsbereich
- 26: Mitte
- 28: Seitenwandung
- 30: Seitenwandung
- 32: Längserstreckung
- 34: Längsrichtung
- 36: Materialstärke
- 38: Achsenauflageelement
- 40: Achsenauflagefläche
- 42: Teilbereich
- 44: Längsrichtung
- 46: Zwischenraum
- 48: Ausnehmung
- 50: Achsenmontageklammer
- 52: Solarmodulhalteelement
- 54: Weiteres Solarmodulhalteelement
- 56: Potentialausgleichselement
- 58: Weiteres Potentialausgleichselement
- 60: Weiteres Solarmodul
- 62: Spitze
- 64: Gewindeloch
- 66: Gewindeloch
- 68: Sicke
- 70: Versteifungselement
- 72: Ausnehmung
- 74: Ausnehmung
- 76: Mittelachse
- 78: Solarpark
- 80: Antriebseinheit
- 82: Befestigungsplättchen
- 84: Befestigungsschrauben
- 86: Kante
- 88: Klammerelement
- 90: Klammerelement
- 92: Oberfläche
- 94: Schraubverbindung
- 96: Verjüngungsbereich
- 98: Kantenfläche
- 100: Mittelbereich
- 102: Endbereich
- 104: Endbereich
- 106: Spitze
- 108: Spiegelebene
- 110: Spiegelebene
- 112: Ausnehmung
- 114: Absatz
- 116: Verfahrensschritt
- 118: Verfahrensschritt

## Patentansprüche

1. Solarmodulhaltevorrichtung (10), welche dazu vorgesehen ist, eine Montage zumindest eines, insbesondere sonnenstandfolgenden, Solarmoduls (12) mit einer, insbesondere rotierbaren, Achse (14) zu ermöglichen, mit einem Grundkörper (16), welcher zumindest eine Auflagefläche (18) ausbildet, welche zu einer Auflage zumindest eines Teils des Solarmoduls (12) vorgesehen ist, wobei der Grundkörper (16) als ein, vorzugsweise einstückiges, Blechteil ausgebildet ist, mit zumindest einem einstückig an den Grundkörper (16) angeformten Solarmodulhalteelement (52, 54), welches zu einer Befestigung eines Solarmoduls (12) vorgesehen ist, und mit zumindest einem weiteren, einstückig an den Grundkörper (16) angeformten Solarmodulhalteelement (52, 54), welches zu einer Befestigung eines von dem Solarmodul (12) verschiedenen weiteren Solarmoduls (12) vorgesehen ist, wobei die Solarmodulhalteelemente (52, 54) hakenförmig ausgebildet sind und aus der Auflagefläche (18) des Grundkörpers (16) hervorstehen, wobei die Solarmodulhalteelemente (52, 54) jeweils dazu vorgesehen sind, eine Formschlussverbindung mit jeweils einem Solarmodul (12) herzustellen, wobei der Grundkörper (16) eine Seitenwandung (28, 30) und eine weitere Seitenwandung (28, 30) aufweist, welche Seitenwandungen (28, 30) zumindest im Wesentlichen senkrecht zu der Auflagefläche (18) abgebogen sind, **dadurch gekennzeichnet, dass** das Solarmodulhalteelement (52, 54) und das weitere Solarmodulhalteelement (52, 54) jeweils von einer Mittellinie der Auflagefläche (18) nach außen in Richtung der jeweiligen Seitenwandungen (28, 30) versetzt angeordnet sind.

2. Solarmodulhaltevorrichtung (10) nach Anspruch 1, **dadurch gekennzeichnet, dass** eine Höhe (20) des Grundkörpers (16) und eine Breite (22) der Auflagefläche (18) des Grundkörpers (16) zumindest abschnittsweise antikorrelieren.

3. Solarmodulhaltevorrichtung (10) nach Anspruch 1 oder 2, **dadurch gekennzeichnet, dass** der Grundkörper (16) zumindest einen Verjüngungsbereich (24, 96) aufweist, innerhalb welchem sich die Auflagefläche (18) zu einer Mitte (26) des Grundkörpers (16) hin verjüngt.

4. Solarmodulhaltevorrichtung (10) nach Anspruch 3, **dadurch gekennzeichnet, dass** eine Höhe (20) des Grundkörpers (16) in dem Verjüngungsbereich (24, 96) zu der Mitte (26) des Grundkörpers (16) hin zunimmt.

5. Solarmodulhaltevorrichtung (10) nach Anspruch 1, **dadurch gekennzeichnet, dass** die Seitenwandung (28, 30) zumindest entlang eines Großteils einer Längserstreckung (32) des Grundkörpers (16) den Grundkörper (16) seitlich begrenzt.

6. Solarmodulhaltevorrichtung (10) nach einem der vorhergehenden Ansprüche, **dadurch gekennzeichnet, dass** Gesamtlängen von Abwicklungen, senkrecht zu einer Längsrichtung (34) des Grundkörpers (16) angefertigter Schnitte, über einen Großteil des Grundkörpers (16), insbesondere in dem Verjüngungsbereich (24, 96), zumindest im Wesentlichen konstant sind.

7. Solarmodulhaltevorrichtung (10) nach einem der vorhergehenden Ansprüche, **dadurch gekennzeichnet, dass** zumindest ein Großteil des Grundkörpers (16) eine zumindest im Wesentlichen konstante Materialstärke (36) aufweist.

8. Solarmodulhaltevorrichtung (10) nach einem der vorhergehenden Ansprüche, **dadurch gekennzeichnet, dass** der Grundkörper (16), insbesondere die Seitenwandung (28, 30), zumindest ein Achsenauflageelement (38) ausbildet, welches zu einer Auflage des Grundkörpers (16) auf die Achse (14) vorgesehen ist.

9. Solarmodulhaltevorrichtung (10) nach Anspruch 8, **dadurch gekennzeichnet, dass** das Achsenauflageelement (38) eine Erstreckung senkrecht zu einer Längsrichtung (34) der Auflagefläche (18) des Grundkörpers (16) aufweist, die zumindest einem Dreifachen, vorzugsweise einem Vierfachen, einer Materialstärke (36) des Grundkörpers (16) entspricht.

10. Solarmodulhaltevorrichtung (10) nach Anspruch 8 oder 9, **dadurch gekennzeichnet, dass** eine durch das Achsenauflageelement (38) ausgebildete Achsenauflagefläche (40) in einer Seitenansicht auf den Grundkörper (16) eine zumindest im Wesentlichen polygonale, insbesondere eine zumindest im Wesentlichen semi-hexagonale, Kontur ausbildet.

11. Solarmodulhaltevorrichtung (10) nach einem der Ansprüche 8 bis 10, **dadurch gekennzeichnet, dass** das Achsenauflageelement (38) zumindest einen Teilbereich (42) aufweist, welcher dazu vorgesehen ist, bei einer Auflage des Grundkörpers (16) auf die Achse (14) frei von einem Kontakt mit der Achse (14) zu bleiben und dadurch in einer Längsrichtung (44) der Achse (14) einen, insbesondere vergrößerten, Zwischenraum (46) zwischen der Achse (14) und dem Grundkörper (16) bereitstellt.

12. Solarmodulhaltevorrichtung (10) zumindest nach Anspruch 1, **dadurch gekennzeichnet, dass** die Seitenwandung (28, 30) zumindest eine Ausnehmung (48, 112) aufweist, welche zu einer Befestigung einer Achsenmontageklammer (50) vorgesehen ist.

13. Solarmodulhaltevorrichtung (10) nach Anspruch 12, **dadurch gekennzeichnet, dass** die Ausnehmung (48, 112) zur Aufnahme der Achsenmontageklammer (50) zumindest teilweise in einem Verjüngungsbereich (24, 96) des Grundkörpers (16) angeordnet ist.

14. Solarmodulhaltevorrichtung (10) nach einem der vorhergehenden Ansprüche, **gekennzeichnet durch** zumindest ein einstückig an den Grundkörper (16) angeformtes Potentialausgleichselement (56), welches zu einer elektrischen Kontaktierung, insbesondere Erdung, eines Solarmoduls (12) vorgesehen ist.

15. Solarmodulhaltevorrichtung (10) nach Anspruch 14, **gekennzeichnet durch** zumindest ein weiteres, einstückig an den Grundkörper (16) angeformtes Potentialausgleichselement (58), welches zu einer elektrischen Kontaktierung, insbesondere Erdung, eines von dem Solarmodul (12) verschiedenen weiteren Solarmoduls (60) vorgesehen ist.

16. Solarmodulhaltevorrichtung (10) nach Anspruch 14 oder 15, **dadurch gekennzeichnet, dass** das/die Potentialausgleichselement/e (56, 58) zumindest eine aus der Auflagefläche (18) hervorstehende Spitze (62) ausbildet/ausbilden, welche insbesondere dazu vorgesehen ist, eine Oberflächenschicht des auf der Auflagefläche (18) aufliegenden Solarmoduls (12, 60), beispielsweise eine Eloxalschicht des Solarmoduls (12, 60), zu durchdringen.

17. Solarmodulhaltevorrichtung (10) nach einem der vorhergehenden Ansprüche, **dadurch gekennzeichnet, dass** der Grundkörper (16), insbesondere auf der Auflagefläche (18), zumindest ein Gewindeloch (64, 66) aufweist.

18. Solarmodulhaltevorrichtung (10) nach Anspruch 17, **dadurch gekennzeichnet, dass** der Grundkörper (16) ein Versteifungselement (70) aufweist, welches in einem Nahbereich des Gewindelochs (64, 66) angeordnet ist und dazu vorgesehen ist, den Grundkörper (16) zumindest in dem Nahbereich des Gewindelochs (64, 66) zu versteifen.

19. Solarmodulhaltevorrichtung (10) nach einem der vorhergehenden Ansprüche, **dadurch gekennzeichnet, dass** die Auflagefläche (18) zumindest eine zentral in dem Grundkörper (16) angeordnete Sicke (68) zu einer Versteifung des Grundkörpers (16) aufweist.

20. Solarmodulhaltevorrichtung (10) nach einem der vorhergehenden Ansprüche, **dadurch gekennzeichnet, dass** der Grundkörper (16) zumindest eine Ausnehmung (72, 74) zu einer Aufnahme einer Blindniet aufweist, welche relativ zu einer parallel zu einer Längsrichtung (34) des Grundkörpers (16) verlaufenden Mittelachse (76) des Grundkörpers (16) seitlich versetzt angeordnet ist.

21. Solarmodulhaltevorrichtung (10) nach einem der vorhergehenden Ansprüche, **dadurch gekennzeichnet, dass** der Grundkörper (16) zumindest im Wesentlichen, insbesondere mit Ausnahme von Ausnehmungen (72, 74) zur Aufnahme von Blindnieten, spiegelsymmetrisch ausgebildet ist.

22. Solarmodulhaltevorrichtung (10) nach einem der vorhergehenden Ansprüche, **dadurch gekennzeichnet, dass** der Grundkörper (16) eine Antikorrosionsschutzbeschichtung aufweist.

23. Solarmodulhaltevorrichtung (10) nach einem der vorhergehenden Ansprüche, **gekennzeichnet durch** eine Achsenmontageklammer (50), welche zu einer verdrehsicheren Montage des Grundkörpers (16) an der Achse (14) vorgesehen ist.

24. Solarpark (78) mit einer Mehrzahl an Solarmodulhaltevorrichtungen (10) nach einem der vorhergehenden Ansprüche, mit zumindest einer Achse (14) und mit einer Mehrzahl an Solarmodulen (12, 60).

25. Verfahren zu einer Herstellung eines Grundkörpers (16) einer Solarmodulhaltevorrichtung (10) nach einem der Ansprüche 1 bis 23, wobei zumindest ein Solarmodulhalteelement (52, 54) und zumindest ein weiteres Solarmodulhalteelement (52, 54) jeweils von einer Mittellinie einer Auflagefläche (18) des Grundkörpers (16) nach außen in Richtung von Seitenwandungen (28, 30) des Grundkörpers (16) versetzt einstückig an dem Grundkörper (16) angeformt werden.

26. Verfahren nach Anspruch 25, **dadurch gekennzeichnet, dass** bei einer Herstellung des Grundkörpers (16) ein Blechverschnitt von weniger als 10 % eines Ausgangsblechs erzeugt wird.

27. Verfahren nach Anspruch 25 oder 26, **dadurch gekennzeichnet, dass** der Grundkörper (16) mittels eines Pressverfahrens hergestellt wird, wobei höchstens 5 % einer Gesamtfläche eines Metallblechs, aus dem der Grundkörper (16) hergestellt wird, bei einem Pressvorgang des Pressverfahrens einer wesentlichen Zugspannung ausgesetzt wird und/oder wobei auf höchstens 5 % einer Gesamtfläche des Metallblechs, aus dem der Grundkörper (16) hergestellt wird, bei dem Pressvorgang des Pressverfahrens eine Materialstärke (36) des Metallblechs wesentlich verändert wird.

## Claims

1. Solar module holding device (10), which is configured to enable an assembly of at least one, in particular solar-position-tracking, solar module (12), with a shaft (14), in particular a rotatable shaft (14), with a base body (16) that forms at least one support surface (18) configured for a support at least of a portion of the solar module (12), the base body (16) being embodied as a sheet part, which is preferably implemented as one piece,
with at least one solar module holding element (52, 54) which is moulded on the base body (16) integrally and is configured for a fixing of a solar module (12), and with at least one further solar module holding element (52, 54), which is moulded on the base body (16) integrally and is configured for a fixing of a further solar module (12), the solar module holding elements (52, 54) being realized in a hook shape and protruding from the support surface (189 of the base body (16), the solar module holding elements (52, 54) being in each case configured to create a form-fit connection to respectively one solar module (12),
wherein the base body (16) has a side wall (28, 30) and a further side wall (28, 30), said side walls (28, 30) being bent off at least substantially perpendicularly to the support surface (18),
**characterised in that** the solar module holding element (52, 54) and the further solar module holding element (52, 54) are arranged in each case at an offset from a central line of the support surface (18) outwards towards the respective side walls (28, 30).

2. Solar module holding device (10) according to claim 1,
**characterised in that** a height (20) of the base body (16) and a width (22) of the support surface (18) of the base body (16) are at least section-wise anti-correlated.

3. Solar module holding device (10) according to claim 1 or 2,
**characterised in that** the base body (16) comprises at least one tapering region (24, 96) in which the support surface (18) tapers toward a centre (26) of the base body (16).

4. Solar module holding device (10) according to claim 3,
**characterised in that** a height (20) of the base body (16) increases in the tapering region (24, 96) toward the centre (26) of the base body (16).

5. Solar module holding device (10) according to claim 1,
**characterised in that** the side wall (28, 30) delimits the base body (16) sidewise at least along a large portion of a longitudinal extension (32) of the base body (16).

6. Solar module holding device (10) according to one of the preceding claims, **characterised in that** total lengths of developments of sections made perpendicularly to a longitudinal direction (34) of the base body (16) are at least substantially constant over a large portion of the base body (16), in particular in the tapering region (24, 96).

7. Solar module holding device (10) according to one of the preceding claims, **characterised in that** at least a large portion of the base body (16) has an at least substantially constant material thickness (36).

8. Solar module holding device (10) according to one of the preceding claims, **characterised in that** the base body (16), in particular the side wall (28, 30), forms at least one shaft support element (38) which is configured for a support of the base body (16) on the shaft (14).

9. Solar module holding device (10) according to claim 8,
**characterised in that** the shaft support element (38) has an extension perpendicularly to a longitudinal direction (34) of the support surface (18) of the base body (16) which is equivalent at least to a three-fold, preferably to a fourfold, of a material thickness (36) of the base body (16).

10. Solar module holding device (10) according to claim 8 or 9,
**characterised in that** in a side view onto the base body (16), a shaft support surface (40) formed by the shaft support element (38) forms an at least substantially polygonal contour, in particular an at least substantially semi-hexagonal contour.

11. Solar module holding device (10) according to one of claims 8 to 10,
**characterised in that** the shaft support element (38) comprises at least one partial region (42) which is configured, when the base body (16) lies upon the shaft (14), to remain free of a contact with the shaft (14), thus providing an, in particular enlarged, interspace (46) between the shaft (14) and the base body (16) in a longitudinal direction (44) of the shaft (14).

12. Solar module holding device (10) at least according to claim 1,
**characterised in that** the side wall (28, 30) has at least one recess (48, 112) that is configured for a fixing of a shaft mounting clamp (50).

13. Solar module holding device (10) according to claim 12,
**characterised in that** the recess (48, 112) for receiving the shaft mounting clamp (50) is arranged at least partly in a tapering region (24, 96) of the base body (16).

14. Solar module holding device (10) according to one of the preceding claims, **characterised by** at least one potential compensation element (56), which is moulded on the base body (16) integrally and is configured for an electrical contacting, in particular electrical grounding, of a solar module (12).

15. Solar module holding device (10) according to claim 14,
**characterised by** at least one further potential compensation element (58), which is moulded on the base body (16) integrally and which is configured for an electrical contacting, in particular electrical grounding, of a further solar module (60) that is different from the solar module (12).

16. Solar module holding device (10) according to claim 14 or 15,
**characterised in that** the potential compensation element/s (56, 58) forms/form at least one tip (62), which protrudes from the support surface (18) and which is in particular configured to penetrate a surface layer of the solar module (12, 60) lying upon the support surface (18), for example an anodized aluminium layer of the solar module (12, 60).

17. Solar module holding device (10) according to one of the preceding claims, **characterised in that** the base body (16) comprises, in particular on the support surface (18), at least one threaded hole (64, 66).

18. Solar module holding device (10) according to claim 17,
**characterised in that** the base body (16) comprises a stiffening element (70), which is arranged in a proximity of the threaded hole (64, 66) and is configured for stiffening the base body (16) at least in the proximity of the threaded hole (64, 66).

19. Solar module holding device (10) according to one of the preceding claims, **characterised in that** the support surface (18) comprises at least one crimp (68), which is arranged centrally in the base body (16), for a stiffening of the base body (16).

20. Solar module holding device (10) according to one of the preceding claims, **characterised in that** the base body (16) comprises at least one recess (72, 74) for receiving a blind rivet, which is arranged offset sidewise relative to a central axis (76) of the base body (16) extending parallel to a longitudinal direction (34) of the base body (16).

21. Solar module holding device (10) according to one of the preceding claims, **characterised in that** the base body (16) is formed at least substantially in a mirror-symmetrical manner, in particular with the exception of recesses (72, 74) for receiving blind rivets.

22. Solar module holding device (10) according to one of the preceding claims, **characterised in that** the base body (16) comprises an anticorrosion protection coating.

23. Solar module holding device (10) according to one of the preceding claims, **characterised by** a shaft-mounting clamp (50), which is configured for a rotationally fixed mounting of the base body (16) to the shaft (14).

24. Solar park (78) with a plurality of solar module holding devices (10) according to one of the preceding claims,
with at least one shaft (14) and with a plurality of solar modules (12, 60).

25. Method for producing a base body (16) of a solar module holding device (10) according to one of claims 1 to 23,
wherein at least one solar module holding element (52, 54) and at least one further solar module holding element (52, 54) are moulded integrally to the base body (16) in each case at an offset from a central line of a support surface (18) of the base body (16) outwards towards side walls (28, 30) of the base body (16).

26. Method according to claim 25,
**characterised in that** in a production of the base body (16) a sheet offcut of less than 10 % of an original sheet is produced.

27. Method according to claim 25 or 26,
**characterised in that** the base body (16) is produced via a pressing method, wherein maximally 5 % of a total area of a metal sheet which the base body (16) is produced from are exposed to a substantial tensile stress during a pressing process of the pressing method, and/or
wherein on maximally 5 % of a total area of the metal sheet which the base body (16) is produced from, a material thickness (36) of the metal sheet is substantially changed in the pressing process of the pressing method.

## Revendications

1. Dispositif rétenteur de module solaire (10), prévu pour rendre possible un montage d'au moins un module solaire (12), notamment un module solaire (12) suivant la position du soleil,
avec un arbre (14), en particulier un arbre (14) tournable,
avec un corps de base (16) qui forme au moins une surface de support (18) destinée pour l'appui au moins d'une partie du module solaire (10), ledit corps de base (16) étant réalisé comme pièce en tôle, préférablement pièce en tôle d'une seule pièce,
avec au moins un élément rétenteur de module solaire (52, 54) qui est moulé au corps de base (16) intégralement et est prévu pour un fixement d'un module solaire (12)
et avec au moins un autre élément rétenteur de module solaire (52, 54) qui est moulé intégralement sur le corps de base (16) et est prévu pour un fixement d'un autre module solaire (12) différant du module solaire (12),
lesdits éléments rétenteurs de module solaire (52, 54) étant réalisés en forme de crochet et projetant de la surface de support (18) du corps de base (16), lesdits éléments rétenteurs de module solaire (52, 54) étant respectivement destinés à engendrer une liaison en forme avec respectivement un module solaire (12),
le corps de base (16) ayant une paroi latérale (28, 30) et une autre paroi latérale (28, 30), lesdites parois latérales (28, 30) étant pliés au moins sensiblement perpendiculairement par rapport à la surface de support (18),
**caractérisé en ce que** l'élément rétenteur de module solaire (52, 54) et l'autre élément rétenteur de module solaire (52, 54) sont respectivement agencés en décalé d'une ligne centrale de la surface de support (18) vers l'extérieur en direction des parois latérales respectives (28, 30).

2. Dispositif rétenteur de module solaire (10) selon la revendication 1,
**caractérisé en ce qu'**une hauteur (20) du corps de base (16) et une largeur (22) de la surface de support (18) du corps de base (16) sont en anti-corrélation au moins par sections.

3. Dispositif rétenteur de module solaire (10) selon la revendication 1 ou 2,
**caractérisé en ce que** le corps de base (16) comprend au moins une zone de rétrécissement (24, 96), dans laquelle la surface de support (18) se rétrécit vers un centre (26) du corps de base (16).

4. Dispositif rétenteur de module solaire (10) selon la revendication 3,
**caractérisé en ce que** dans la zone de rétrécissement (24, 96) une hauteur (20) du corps de base (16) croît vers le centre (26) du corps de base (16).

5. Dispositif rétenteur de module solaire (10) selon la revendication 1,
**caractérisé en ce que** la paroi latérale (28, 30) délimite le corps de base (16) latéralement au moins le long d'une grande partie d'une étendue longitudinale (32) du corps de base (16).

6. Dispositif rétenteur de module solaire (10) selon l'une des revendications précédentes,
**caractérisé en ce que** des longueurs totales de développements des sections faites sur une grande partie du corps de base (16), perpendiculairement à une direction longitudinale (34) du corps de base (16), en particulier dans la zone de rétrécissement (24, 96), sont au moins sensiblement constantes.

7. Dispositif rétenteur de module solaire (10) selon l'une des revendications précédentes,
**caractérisé en ce qu'**au moins une grande partie du corps de base (16) présente une épaisseur de matériau (36) au moins sensiblement constante.

8. Dispositif rétenteur de module solaire (10) selon l'une des revendications précédentes,
**caractérisé en ce que** le corps de base (16), en particulier la paroi latérale (28, 30) forme au moins un élément d'appui d'arbre (38) destiné pour un appui du corps de base (16) sur l'arbre (14).

9. Dispositif rétenteur de module solaire (10) selon la revendication 8,
**caractérisé en ce que** l'élément d'appui d'arbre (38) présente une étendue perpendiculairement à une direction longitudinale (34) de la surface de support (18) du corps de base (16) qui est équivalente à au moins un triple, préférablement un quadruple, d'une épaisseur de matériau (36) du corps de base (16).

10. Dispositif rétenteur de module solaire (10) selon la revendication 8 ou 9,
**caractérisé en ce que** dans une vue latérale sur le corps de base (16), une surface d'appui d'arbre (40) formée par l'élément d'appui d'arbre (38) réalise un contour au moins sensiblement polygonal, en particulier un contour au moins sensiblement semi-hexagonal.

11. Dispositif rétenteur de module solaire (10) selon l'une des revendications 8 à 10, **caractérisé en ce que** l'élément d'appui d'arbre (38) comprend au moins une sub-zone (42) qui est prévue, si le corps de base (16) repose sur l'arbre (14), à rester libre d'un contact avec l'arbre (14), ainsi pourvoyant en direction longitudinale (44) de l'arbre (14) un interstice (46), en particulier un interstice (46) élargi, entre l'arbre (14) et le corps de base (16).

12. Dispositif rétenteur de module solaire (10) au moins selon la revendication 1, **caractérisé en ce que** la paroi latérale (28, 30) comporte au moins une encoche (48, 112) qui est prévue pour un fixement d'une pince montage-arbre (50).

13. Dispositif rétenteur de module solaire (10) selon la revendication 12,
**caractérisé en ce que** l'encoche (48, 112) pour recevoir la pince montage-arbre (50) est disposée au moins partiellement dans une zone de rétrécissement (24, 96) du corps de base (16).

14. Dispositif rétenteur de module solaire (10) selon l'une des revendications précédentes,
**caractérisé par** au moins un élément à liaison équipotentielle (56) qui est moulé intégralement sur le corps de base (16) et est conçu pour un branchement électrique, notamment une mise à terre, d'un module solaire (12).

15. Dispositif rétenteur de module solaire (10) selon la revendication 14,
**caractérisé par** au moins un autre élément à liaison équipotentielle (58) qui est moulé intégralement sur le corps de base (16) et est conçu pour un branchement électrique, notamment une mise à terre, d'un autre module solaire (60) différant du module solaire (12).

16. Dispositif rétenteur de module solaire (10) selon la revendication 14 ou 15, **caractérisé en ce que** l'élément/les éléments à liaison équipotentielle (56, 58) forme/forment au moins une pointe (62) qui projète de la surface de support (18) et qui est en particulier destinée à pénétrer une couche superficielle du module solaire (12, 60) reposant sur la surface de support (18), par exemple une couche d'aluminium anodisé du module solaire (12, 60).

17. Dispositif rétenteur de module solaire (10) selon l'une des revendications précédentes,
**caractérisé en ce que** le corps de base (16) comporte, en particulier sur la surface de support (18), au moins un trou fileté (64, 66).

18. Dispositif rétenteur de module solaire (10) selon la revendication 17,
**caractérisé en ce que** le corps de base (16) comprend un élément à raidissement (70) disposé dans une proximité du trou fileté (64, 66) et destiné à raidir le corps de base (16) au moins dans la proximité du trou fileté (64, 66).

19. Dispositif rétenteur de module solaire (10) selon l'une des revendications précédentes,
**caractérisé en ce que** la surface de support (18) comprend au moins une nervure (68) pour un raidissement du corps de base (16) disposée centralement dans le corps de base (16).

20. Dispositif rétenteur de module solaire (10) selon l'une des revendications précédentes,
**caractérisé en ce que** le corps de base (16) comporte au moins un renfoncement (72, 74) pour recevoir un rivet aveugle, qui est disposé en décalé latéral par rapport à un axe central (76) du corps de base (16) s'étendant en parallèle à une direction longitudinale (34) du corps de base (16).

21. Dispositif rétenteur de module solaire (10) selon l'une des revendications précédentes,
**caractérisé en ce que** le corps de base (16) est réalisé au moins sensiblement, en particulier à l'exception de renfoncements (72, 74) pour recevoir des rivets aveugles, en symétrie axiale.

22. Dispositif rétenteur de module solaire (10) selon l'une des revendications précédentes,
**caractérisé en ce que** le corps de base (16) comporte un revêtement protectif-anticorrosion.

23. Dispositif rétenteur de module solaire (10) selon l'une des revendications précédentes,
**caractérisé par** une pince montage-arbre (50) prévue pour un montage anti-rotatif du corps de base (16) sur l'arbre (14).

24. Parque solaire (78)
avec une pluralité de dispositifs rétenteurs de module solaire (10) selon l'une des revendications précédentes,
avec au moins un arbre (14) et avec une pluralité de modules solaires (12, 60).

25. Procédé pour fabriquer un corps de base (16) d'un dispositif rétenteur de module solaire (10) selon l'une des revendications 1 à 23,
où au moins un élément rétenteur de module solaire (52, 54) et au moins un autre élément rétenteur de module solaire (52, 54) sont moulés intégralement sur le corps de base (16) respectivement en décalé d'une ligne centrale d'une surface de support (18) du corps de base (16) vers l'extérieur en direction de parois latérales (28, 30) du corps de base (16).

26. Procédé selon la revendication 25,
**caractérisé en ce que** dans une fabrication du corps de base (16) les chûtes de tôle sont moins de 10 % d'une tôle originale.

27. Procédé selon la revendication 25 ou 26,
**caractérisé en ce que** le corps de base (16) est fabriqué par un procédé de pressage,
où dans un procès de pressage du procédé de pressage maximalement 5 % d'une surface totale d'une tôle en métal de laquelle le corps de base (16) est fabriqué sont exposés à une tension de traction considérable, et/ou
où dans le procès de pressage du procédé de pressage sur maximalement 5 % d'une surface totale de la tôle en métal de laquelle le corps de base (16) est fabriqué une épaisseur de matériau (36) de la tôle en métal est sensiblement changée.
